(19) Europäisches Patentamt / European Patent Office / Office européen des brevets

(11) **EP 2 700 518 B1**

(12) **EUROPEAN PATENT SPECIFICATION**

(45) Date of publication and mention
of the grant of the patent:
**26.09.2018 Bulletin 2018/39**

(21) Application number: **12773678.3**

(22) Date of filing: **09.04.2012**

(51) Int Cl.:
***B60H 1/00*** *(2006.01)*    ***B60H 1/22*** *(2006.01)*
***B60H 1/34*** *(2006.01)*    ***B60H 1/03*** *(2006.01)*

(86) International application number:
**PCT/JP2012/002456**

(87) International publication number:
**WO 2012/144154 (26.10.2012 Gazette 2012/43)**

(54) **AIR-CONDITIONING DEVICE FOR VEHICLE**

KLIMAANLAGENSYSTEM FÜR EIN FAHRZEUG

DISPOSITIF DE CLIMATISATION POUR VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.04.2011   JP 2011093281**

(43) Date of publication of application:
**26.02.2014   Bulletin 2014/09**

(73) Proprietor: **TOYOTA JIDOSHA KABUSHIKI
KAISHA
Toyota-shi, Aichi-ken, 471-8571 (JP)**

(72) Inventors:
• **MORIKAWA, Masahiko**
**Kariya-City**
**Aichi 448-8661 (JP)**
• **IWATA, Yoshimi**
**Kariya-City**
**Aichi 448-8661 (JP)**
• **TABEI, Koichi**
**Toyota-City**
**Aichi 471-8571 (JP)**
• **YASUI, Keiji**
**Toyota-City**
**Aichi 471-8571 (JP)**
• **AOISHI, Koichi**
**Toyota-City**
**Aichi 471-8571 (JP)**

(74) Representative: **Klingseisen, Franz
Klingseisen, Rings & Partner
Patentanwälte
Postfach 10 15 61
80089 München (DE)**

(56) References cited:
**DE-A1- 10 013 165      DE-A1-102005 041 376
JP-A- 11 001 117        JP-A- 2005 170 215
JP-A- 2007 216 793      JP-A- 2007 230 321
JP-A- 2008 174 042      JP-A- 2008 296 717
JP-A- 2008 296 717      US-A1- 2008 168 766**

**Description**

The present invention relates to an air conditioner for a vehicle.

US 2008/168766 A1 discloses an air conditioner for a vehicle comprising an air conditioning case having an air intake port on a first side and a plurality of air outlets on a second side, air passing through the plurality of air outlets towards a passenger compartment, the plurality of air outlets being opened correspond to a plurality of seats including a driver seat, and at least one other seat, the air conditioning case having an air passage between the air intake port and the plurality of air outlets;

an auxiliary heating element having a heat source (electricity) other than waste heat of the engine for a heating operation;

a water temperature detector which detects a temperature of the cooling water; and

a control part which conducts an air conditioning for the passenger compartment by controlling the main heating element and the auxiliary heating element based on the temperature of the cooling water detected by the water temperature detector, wherein the control part outputs a demand signal demanding the engine to start when it is determined that the water temperature is lower than a threshold,

the control part lowers the threshold in accordance with an increase in a heat amount emitted from the auxiliary heating element based on an operation state of the auxiliary heating element, in a state where the conditioned-air is blown off to the driver seat and the other seat.

Conventionally, in an air-conditioner for a hybrid car, it is determined whether heating is required for a passenger compartment based on a sensor signal output from an inside air temperature sensor and an outside air temperature sensor. When it is determined that heating is necessary for the passenger compartment and when a temperature of cooling water of an engine is low, the engine is activated even while the engine is suspended because the hybrid car just starts driving or is driving with low speed. Thereby, the cooling water sufficiently warmed in the water jacket of the engine can be supplied to a heater core, such that a heat source is secured for heating the passenger compartment (for example, refer to Patent document 1).

In an air-conditioner of Patent document 1, the engine is activated when it is determined that heating is required for the passenger compartment. However, the fuel consumption is increased while the heating capacity can be secured.

An air-conditioner for a vehicle is disclosed, which includes not only the heater core using the engine cooling water but also a seat heater for warming a seat (for example, refer to Patent document 2). In the air-conditioner of Patent document 2, when the heating level of the seat heater is high, it is considered that a heating operation is being performed for the passenger compartment, and the engine start is restricted even while the cooling water temperature is low.

In the art of Patent document 2, when an auxiliary heating equipment such as a seat heater is operating, the frequency of starting the engine is lowered to lower the water temperature, not depending on the number of occupants on the vehicle. On the other hand, when the auxiliary heating equipment is stopped, the frequency of starting the engine is raised to increase the water temperature up to a setting-out water temperature. However, when the occupant is only a driver, the heating capacity can be reduced compared with a case where all the seats are occupied by occupants. If the frequency of starting the engine is raised to increase the water temperature up to the setting-out water temperature in such a case, energy efficiency becomes worse.

PRIOR ART DOCUMENT

Patent Document

Patent document 1: JP-H10-278569A
Patent document 2: JP-2008-174042A

SUMMARY OF THE INVENTION

It is an object of the present disclosure to provide an air-conditioner for a vehicle which can achieve a heating performance without a decrease in fuel efficiency. This is achieved by the features in claim 1.

According to a first aspect of the present disclosure, an air-conditioner for a vehicle includes

an air conditioning case having an air intake port on a first side and a plurality of air outlets on a second side, air passing through the plurality of air outlets toward a passenger compartment, the plurality of air outlets being opened to correspond to a plurality of seats including a predetermined seat, which contains at least a driver seat, and the other seat, the air conditioning case having an air passage between the air intake port and the plurality of air outlets, blow-off air passing through the air passage;

an air conditioning blower sending air to the air passage of the air conditioning case;

an air conditioning part having a main heating element which heats air sent from the air conditioning blower using cooling water of an engine as a heat source, the air conditioning part sending conditioned-air to the plurality of air outlets;

an auxiliary heating element having a heat source other than waste heat of the engine for a heating operation;

an opening-and-closing part which changes opening-and-closing state of the plurality of air outlets between an allowed state and an intercepted state, conditioned-air being allowed to pass an air outlet of the plurality of air outlets which air-conditions the other seat except the predetermined seat in the allowed state and being intercepted in the intercepted state, conditioned-air being allowed to pass an air outlet of the plurality of air outlets which air-conditions the predetermined seat in the intercepted state;

a water temperature detector which detects a temperature of the cooling water; and

a control part which conducts an air conditioning for the passenger compartment by controlling the main heating element and the auxiliary heating element based on the temperature of the cooling water detected by the water temperature detector, wherein the control part outputs a demand signal demanding the engine to start when it is determined that the water temperature is lower than a threshold,

the control part lowers the threshold in accordance with an increase in a heat amount emitted from the auxiliary heating element based on an operation state of the auxiliary heating element, in a normal state where the conditioned-air is blown off to the predetermined seat and the other seat, and

the control part controls the opening-and-closing part into the intercepted state and further lowers the threshold rather than the threshold controlled in the normal mode as a control of a predetermined seat state when a predetermined seat air conditioning command is provided to air-condition the predetermined seat

The air conditioning part includes the main heating element which heats air sent from the air conditioning blower, and further includes the auxiliary heating element for a heating operation. The main heating element uses cooling water of the engine as a heat source, and the auxiliary heating element having a heat source other than waste heat of the engine. Therefore, the heat source is different between the main heating element and the auxiliary heating element. When the heat source is shorted in the main heating element, the shortage can be covered by the auxiliary heating element. Such the main heating element and the auxiliary heating element are controlled by the control part. The control part outputs a demand signal demanding the engine to start when it is determined that the water temperature is lower than a threshold When the engine is started, the waste heat of the engine heats the cooling water. Thus, the heat source for the heating operation can be secured when the control part outputs the demand signal to raise the temperature of the cooling water of the engine to be higher than or equal to the threshold.

Further, the control part lowers the threshold in accordance with an increase in a heat amount emitted from the auxiliary heating element based on an operation state of the auxiliary heating element, in a normal state where the conditioned-air is blown off to the predetermined seat and the other seat Therefore, as the heat amount emitted from the auxiliary heating element is increased, it becomes difficult to determine the temperature of the cooling water of the engine to be lower than the threshold, so it becomes difficult to output the demand signal demanding the start of the engine Thereby, it becomes difficult to start the engine because the heat amount emitted from the auxiliary heating element is considered in the normal state. Accordingly, a heating performance can be achieved without a decrease in fuel efficiency

Further, the control part controls the opening-and-closing part into the intercepted state when a predetermined seat air conditioning command is provided to air-condition the predetermined seat The predetermined seat includes at least a driver seat, so the predetermined seat is, for example, only a driver seat or is constructed by both the driver seat and the passenger seat When the opening-and-closing part is controlled into the intercepted state, conditioned-air can be sent only to an occupant seated on the predetermined seat (hereafter may be referred as a predetermined occupant). Thus, the air-conditioning range becomes narrow compared with the normal state, so the air-conditioning capacity can be lowered. Moreover, the control part further lowers the threshold in the predetermined seat state rather than the threshold controlled in the normal mode Therefore, in the predetermined seat state, as the heat amount emitted from the auxiliary heating element is increased, it becomes difficult to determine the temperature of the cooling water of the engine to be lower than the threshold, so it becomes difficult to output the demand signal demanding the start of the engine Thereby, it becomes further difficult to start the engine because the air-conditioning range becomes narrow, in the predetermined seat state, and because the heat amount emitted from the auxiliary heating element is considered Accordingly, a heating performance can be achieved without a decrease in fuel efficiency.

The air-conditioner may further include an input unit through which the predetermined seat air conditioning command is input.

Because the air-conditioner includes the input unit through which the predetermined seat air conditioning command is input, the normal state can be shifted to the predetermined seat state when an occupant operates the input unit Therefore, the control of the predetermined seat state can be executed at a timing expected by the occupant without using a sensor detecting an occupant Thus, the structure of the air-conditioner can be simplified without the sensor detecting the occupant so as to be shifted to the control of the predetermined seat state

The air-conditioner may further include an occupant detector which detects a presence or absence of an occupant on at least one seat of the plurality of seats, and

the control part executes the control of the predetermined seat state when it is determined that an occupant is present only in the predetermined seat based on a detection result of the occupant detector

When it is determined that an occupant is present only in the predetermined seat based on a detection result of the occupant detector, the predetermined seat can be air-conditioned in the concentrated state automatically Therefore, the operation by an occupant becomes unnecessary, so convenience in the operation can be improved.

For example, the occupant detector includes

a belt detector which detects a fastening of a seat belt provided to the at least one seat, and

a load detector which detects a load added to a surface of a seat to which the belt detector is provided, and

the control part determines that an occupant is present in the seat when the belt detector detects the fastening of the seat belt or when the load detector detects a load which is larger than or equal to a predetermined value

The occupant detector includes the belt detector and the load detector. Therefore, the presence or absence of occupant at the driver seat can be detected by the two detectors. The control part determines that an occupant is present in the driver seat when the belt detector detects the fastening of the seat belt or when the load detector detects a load which is larger than or equal to a predetermined value The control part determines that an occupant is present in the seat when the load detector detects a load which is larger than or equal to a predetermined value even in a case where the fastening of the seat belt is not detected. Accordingly, detection accuracy can be raised because the load detector can detect the presence or absence of occupant even in the case where the seat belt is not fastened while the vehicle is stopped.

BRIEF DECRITPTION FOR DRAWINGS

FIG. 1 is a schematic view illustrating an entire structure of an air conditioner for a vehicle according to an embodiment;
FIG. 2 is a perspective view illustrating a passenger compartment of the vehicle to which the air conditioner is provided;
FIG. 3 is a block diagram illustrating an electric construction of the air conditioner;
FIG. 4 is a front view illustrating a control panel;
FIG. 5 is a flow chart illustrating a processing example at a normal mode;
FIG. 6 is a flow chart illustrating an example of a temperature control program;
FIG. 7 is a flow chart illustrating an example of a process obtaining a seat heater state;
FIG. 8 is a flow chart illustrating an example of a process obtaining a vehicle occupant state;
FIG. 9 is a schematic view illustrating the passenger compartment at a concentrated control mode;
FIG. 10 is a schematic view illustrating the passenger compartment at a front seat mode;
FIG. 11 is a flow chart illustrating an example of a process setting a PTC heater;
FIG. 12 is a flow chart illustrating an example of a process setting a water temperature;
FIG. 13 is a flow chart illustrating an example of a process controlling a water temperature;
FIG. 14 is a drawing illustrating a determination map about a cooperation with a seat heater; and
FIG. 15 is a drawing illustrating a map for setting a water temperature

EMBODIMENT TO PRACTICE THE INVENTION

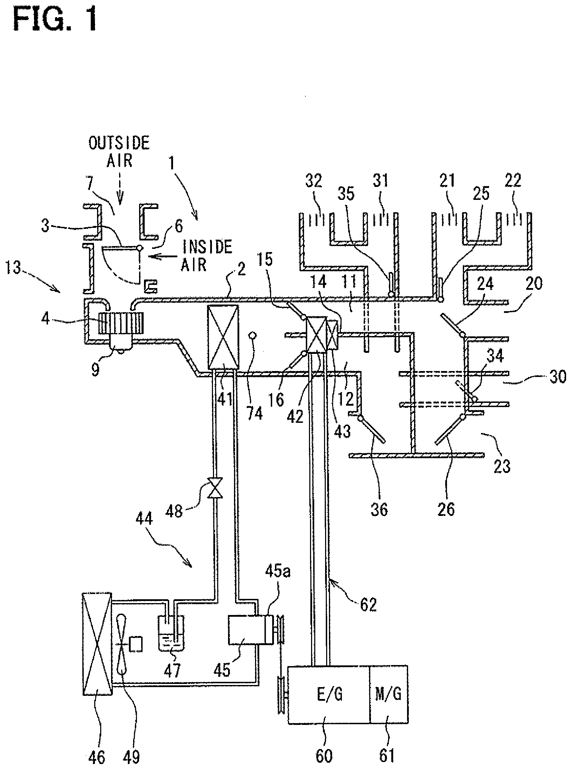

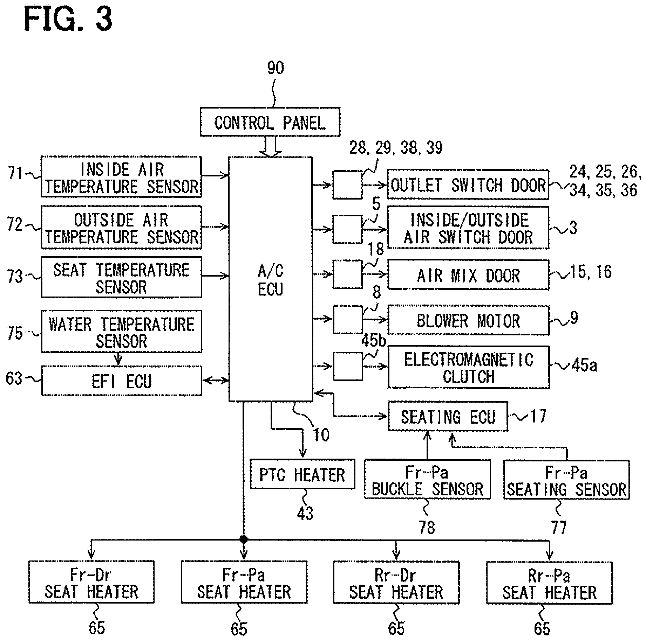

An embodiment will be described with reference to FIGS 1-15. An air-conditioner 100 according to the embodiment is mounted in a hybrid car. The hybrid car is constructed to include an engine 60 for traveling, an engine start equipment (not shown), an electric motor 61 for traveling, a hybrid ECU (not shown), and an engine ECU 63.

The engine 60 is connected to drive an axle of the hybrid car in the attachable and detachable state. The electric motor 61 is connected to drive the axle of the hybrid car in the attachable and detachable state. The electric motor 61 is connected with the axle when the engine 60 is not connected to the axle Therefore, either one of the engine 60 and the electric motor 61 is connected with the axle, and the other is not connected to the axle. The electric motor 61 is constructed to be automatically controlled (for example, inverter control) by the hybrid ECU The engine start equipment starts the engine 60. When a run of the hybrid car and a charge of a battery are required, the engine ECU 63 actuates the engine 60 by controlling the energization of the engine start equipment. The hybrid ECU communicates with the engine ECU 63, and suspends the engine 60 and actuates the electric motor 61, if needed, in a traveling time, such that the combustion efficiency of gasoline (fuel) becomes the optimal.

Next, the air-conditioner 100 will be described The air-conditioner 100 is what is called an auto air-conditioner system constructed so that an air conditioning unit 1 which air-conditions inside of a passenger compartment is controlled by an air-conditioner ECU 10, in a vehicle such as a car including a water-cooled engine for traveling

The air conditioning unit 1 is an air-conditioner unit which is able to conduct a temperature control for a driver seat side air conditioning space and a passenger seat side air conditioning space, in the passenger compartment, and a change for the air outlet mode, mutually independently The driver seat side air conditioning space is a space including a driver seat and a rear seat behind the driver seat. Moreover, the passenger seat side air conditioning space is a space including a passenger seat and a rear seat behind the passenger seat.

The air conditioning unit 1 is arranged in the front side of the passenger compartment of the vehicle, and has an air conditioning case 2 where blow-off air passes inside. A first side of the air conditioning case 2 has an air intake port, and a second side of the air conditioning case 2 has plural air outlets through which air passes toward the passenger compartment The air conditioning case 2 has an air passage through which the blow-off air passes between the air intake port and the air outlets, A blower unit 13 is provided in the upstream (the first side) of the air conditioning case 2 The blower unit (air conditioning blower) 13 includes an inside/outside air switch door 3 and a blower 4. The inside/outside air switch door 3 is driven by an actuator such as a servo motor 5, and is an inlet-port switch part which changes an opening degree of an inside air inlet port 6 and an outside air inlet port 7 corresponding to the air intake port

The air conditioning unit 1 is called as a complete center layout type which is mounted under an instrument board ahead of the passenger compartment and is located at a center position in a vehicle left-and-right direction, that is not illustrated in details. The blower unit 13 is placed on the front side from the air conditioning unit 1 in the vehicle The inside air inlet port 6 of the blower unit 13 is opened on the lower side of the driver seat side, and draws air in the passenger compartment from the driver seat side

The blower 4 is a centrifugal type fan driven by a blower motor 9 which is controlled by a blower drive circuit 8, and generates air flow flowing toward the passenger compartment in the air conditioning case 2 The blower 4 also has the function changing the blow-off air amount of conditioned-air blown from each air outlet 20-23, 30-33 on the driver seat side and the passenger seat side, to be mentioned later, toward the driver seat side air conditioning space and the passenger seat side air conditioning space in the passenger compartment, respectively.

An evaporator 41, a heater core 42, and a PTC heater 43 are arranged in the air conditioning case 2 as an air conditioning part which heats or cools air sent from the blower unit 13 and sends the conditioned-air to the plural air outlets. The evaporator 41 functions as a cooler which cools air passing through the air conditioning case 2.

Moreover, the heater core 42 is arranged downstream of the evaporator 41 in the air flow direction, and heats air passing through a first air passage 11 and a second air passage 12 by exchanging heat with the cooling water of the engine 60 as a heater The cooling water of the engine 60 circulates in a cooling water circuit 62, in which a water pump (not shown) circulates the cooling water warmed by the water jacket of the engine 60, and the cooling water circuit 62 has a radiator (not shown), a thermostat (not shown), and the heater core 42 The heater core 42 corresponds to a main heating element of the present disclosure The cooling water which cools the engine 60 flows inside the heater core 42, thereby reheating cool air using this cooling water as a heat source for heating The heater core 42 is placed downstream of the evaporator in the air conditioning case so as to partially occupy the first air passage 11 and the second air passage 12,

The PTC (Positive Temperature Coefficient) heater 43 is arranged downstream of the heater core 42 in the air flow direction The PTC heater 43 may correspond to an auxiliary heating element which heats air using heat source other than the waste heat of the engine 60 for a heating operation, and electric power is the heat source. The PTC heater 43 heats the air which passed through the heater core 42 as the heat source for heating. The PTC heater 43 has a heat emitting element (not shown), and heat is emitted when the heat emitting element is supplied with electricity so as to warm air around the heat emitting element. The heat emitting element may be constructed by fitting plural PTC elements in a resin frame molded by using resin material having heat-withstanding property (such as 66 nylon, polybutadiene terephthalate, etc.). The PTC heater 43 is controlled by the air-conditioner ECU 10. The wattage number of the PTC heater 43 is controllable stepwise In the present embodiment, the output of the PTC heater 43 is selected from 300W, 450W, and 600W by the air-conditioner ECU 10 according to the needed heat amount

Each of the first air passage 11 and the second air passage 12 is partitioned by a partition board 14 A driver seat side air mixing door 15 and a passenger seat side air mixing door 16 are arranged upstream of the heater core 42 in the air flow direction, which mutually independently conduct temperature control of the driver seat side air conditioning space and the passenger seat side air conditioning space in the passenger compartment

Each air mixing door 15, 16 is driven by an actuator such as a servo motor 17, 18, and changes the blow off temperature of conditioned-air blown off from each air outlet 20-23, 30-33 on the driver seat side and the passenger seat side toward each air conditioning space in the passenger compartment, respectively. In other words, the air mixing door 15, 16 functions as an air mix part which adjusts the air amount ratio between the air passing through the evaporator 41 and the air passing through the heater core 42.

The evaporator 41 is one component of a refrigerating cycle 44. The refrigerating cycle 44 includes a compressor 45 belt-driven by an output shaft of the engine 60 mounted in an engine compartment of the vehicle to compress and discharge refrigerant, a condenser 46 condensing refrigerant discharged from the compressor 45, a receiver 47 separating liquid refrigerant flowing out of the condenser 46 into gas and liquid, an expansion valve 48 adiabatically expanding the liquid refrigerant flowing out of the receiver 47, and the evaporator 41 evaporating the gas-liquid two phase state refrigerant flowing out of the expansion valve 48

An electromagnetic clutch 45a is connected to the compressor 45 of the refrigerating cycle 44, and intermittently transmits the rotation power from the engine 60 to the compressor 45 as a clutch part. The electromagnetic clutch 45a is controlled by a clutch drive circuit 45b

When the electromagnetic clutch 45a is supplied with electricity (ON), the rotation power of the engine 60 is transmitted to the compressor 45, and the evaporator 41 cools air When the energization of the electromagnetic clutch 45a is stopped (OFF), the engine 60 and the compressor 45 are disconnected from each other, and the air cooling action by the evaporator 41 is suspended. The ON/OFF of the electromagnetic clutch 45a is controlled according to the comparison result between an after-eva temperature (TE) detected by an after-evaporator temperature sensor 74 and a target after-eva temperature (TEO)

Moreover, the condenser 46 is an outdoor heat exchanger which is arranged at a place easily receiving the running wind produced when the hybrid car travels, in which refrigerant flowing inside exchanges heat with outside air sent by a cooling fan 49 and the running wind.

As shown in FIG. 1, the second side of the air conditioning case 2, i.e., downstream of the first air passage 11 in the air flow direction, communicates with a driver seat side defroster air outlet 20, a driver seat side center face air outlet 21, a driver seat side side-face air outlet 22, and a driver seat side foot air outlet 23 through each blow-off duct Moreover, as shown in FIG 1, the downstream of the second air passage 12 in the air flow direction communicates with a passenger seat side defroster air outlet 30, a passenger seat side center face air outlet 31, a passenger seat side side-face air outlet 32, and a passenger seat side foot air outlet 33 through each blow-off duct.

The driver seat side and passenger seat side defroster air outlets 20, 30 construct an air outlet from which conditioned-air is blown off toward a windshield of the vehicle The driver seat side and passenger seat side face air outlets 21, 22, 31, 32 construct an air outlet from which conditioned-air is blown off toward head and breast of a driver and a passenger seat occupant. The driver seat side and passenger seat side foot air outlets 23, 33 construct an air outlet from which conditioned-air is blown off toward foot of the driver and the passenger seat occupant.

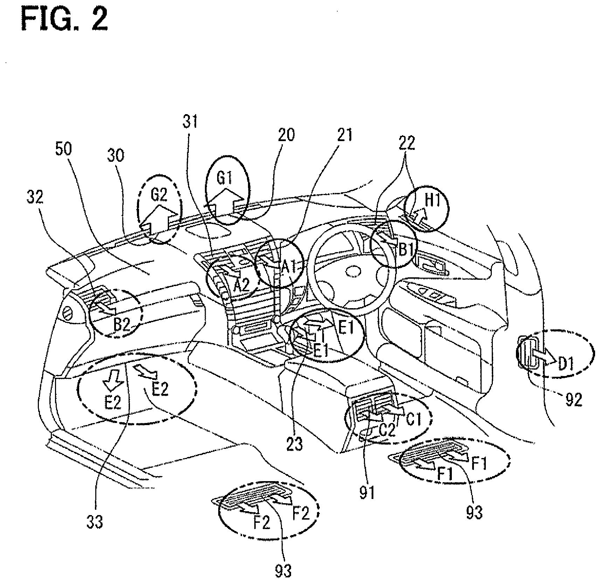

Moreover, although the illustration is omitted in FIG 1, as shown in FIG 2, a rear seat side center face air outlet 91, a rear seat side face air outlet 92, and a rear seat side foot air outlet 93 are defined at each downstream of the first air passage 11 and the second air passage 12 as an air outlet to the rear seat

A driver seat side defroster door 24 and a passenger seat side defroster door 34, a driver seat side face door 25 and a passenger seat side face door 35, a driver seat side foot door 26, and a passenger seat side foot door 36 are defined in the first and second air passage 11, 12 as a driver seat side and passenger seat side air outlet switch door which mutually independently sets up the blow-off mode for the driver seat and the passenger seat in the passenger compartment.

The driver seat side and the passenger seat side air outlet switch door 24-26, 34-36 is driven by an actuator such as a servo motor 28, 29, 38, 39, and changes each blow-off mode for the driver seat and the passenger seat. The passenger seat side air outlet switch door 34-36 is an opening-and-closing part which switches an allowed state and an intercepted state from each other. A passing of the conditioned-air blown off from the air outlets 30-33 covering an air conditioning area corresponding to the other seat other than the seat of the driver (driver seat), of the plural air outlets 20-23, 30-33, is allowed in the allowed state and is intercepted in the intercepted state The air conditioning area represents a range in which the conditioned-air blown off from each air outlet 20-23, 30-33 mainly circulates, and is determined by the blow-off direction of each air outlet 20-23, 30-33 and an obstacle such as seat which exists in the blow-off direction. The driver seat and the passenger seat have a face mode, a bilevel (B/L) mode, a foot mode, a foot/defroster mode and a defroster mode as the blow-off mode.

Moreover, a seat heater is disposed in each of the seats of the vehicle, for example, the driver seat, the passenger seat, the rear seat behind the driver seat, and the rear seat behind the passenger seat The seat heater 65 may correspond to an auxiliary heating element which heats air using a heat source other than the waste heat of the engine 60 for a heating operation, and electric power is the heat source The seat heater 65 is arranged to each seat, and individually heats each seat The seat heater 65 is realized by a PTC heater disposed in each seat, and the seat (bottom and back of the seat) is warmed by the PTC heater The seat heater 65 is controlled by the air-conditioner ECU 10

Next, an electric structure of the air-conditioner 100 will be described hereinafter The air-conditioner ECU 10 is a control part, which is energized with direct current power from a battery (not shown) which is an in-vehicle power source mounted to the vehicle, when an ignition switch is turned on which manages start and stop of the engine 60, so as to start computing processing and controlling processing. A communication signal output from the engine ECU 63, a switch signal output from each switch on the control panel provided to the front face of the passenger compartment, and a sensor signal output from each sensor are input into the air-conditioner ECU 10 The engine ECU 63 is also called as EFI (Electronic Fuel Injection) ECU

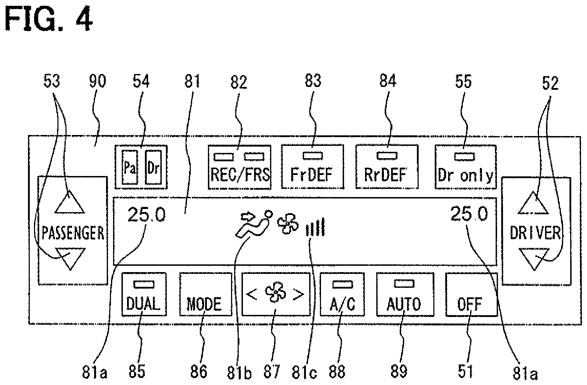

Here, a control panel 90 is explained FIG. 4 is a front view illustrating the control panel 90 The control panel 90 is installed integrally with the instrument panel 50. The control panel 90 has, for example, a liquid crystal display 81, an inside/outside air changeover switch 82, a front defroster switch 83, a rear defroster switch 84, a dual switch 85, a blow-off mode changeover switch 86, a blower air-amount changeover switch 87, an air-conditioning switch 88, an auto switch 89, an off switch 51, a driver seat side temperature setting switch 52, a passenger seat side temperature setting switch 53, a seat heater switch 54, and a concentrated control switch 55 (referred as a driver seat air conditioning switch, a single-seat priority switch, or a single-seat concentrated switch).

The liquid crystal display 81 has a set temperature display part 81a which visually displays the set temperature of the driver seat side and the passenger seat side air conditioning space, a blow-off mode display part 81b which visually displays the blow-off mode, and an air-amount display part 81c which visually displays the blower air amount, The liquid crystal display 81 may further have an outside air temperature display part, an air intake mode display part, and a time display part Moreover, the various kinds of operation switches on the control panel 90 may be defined on the liquid crystal display 81

The various kinds of switches on the control panel 90 are explained. The front defroster switch 83 corresponds to an air conditioning switch which orders to raise the antifogging property of the windshield or not, and is a defroster mode demand part requiring to set the defroster mode as the blow-off mode The dual switch 85 is a right-and-left independent control demand part which orders the right-and-left independent thermal control which performs temperature control of the driver seat side air conditioning space and temperature control of the passenger seat side air conditioning space independently from each other. The mode changeover switch is a mode demand part requiring to set the blow-off mode into either one of the face mode, the bilevel (B/L) mode, the foot mode and the foot/defroster mode according to manual operation by an occupant The air conditioning switch 88 is an air conditioning operation switch which orders the compressor 45 of the refrigerating cycle 44 to operate or stop The air conditioning switch 88 is provided to raise gas mileage by reducing the rotation load of the engine 60 which is achieved by stopping the compressor 45. The temperature setting switch 52, 53 is the driver seat side and the passenger seat side temperature setting part for setting each temperature for the driver seat side air conditioning space and the passenger seat side air conditioning space into a desired temperature (Tset) The seat heater switch 54 is an operation switch for the seat heater 65, and is constructed to be able to operate for each of the driver seat and the passenger seat separately and individually The concentrated control switch 55 is an input unit through which the concentrated control mode to be mentioned later is set as the air conditioning mode according to manual operation by an occupant

A well-known microcomputer, which is not illustrated, is prepared inside the air-conditioner ECU 10, and is constructed to include functions of CPU (central processing unit) which performs the computing processing and the controlling processing, a memory such as ROM or RAM and an I/O port (input/output circuit) A sensor signal from various sensors is made to have A/D conversion by the I/O port or an A/D conversion circuit, and is inputted into the microcomputer The air-conditioner ECU 10 is connected with an inside air temperature sensor 71 detecting the air temperature around the driver seat (inside air temperature) Tr corresponding to an inside air temperature detecting element, an outside air temperature sensor 72 detecting the air temperature outside the passenger compartment (outside air temperature) corresponding to an outside air temperature detecting element, a seat temperature sensor 73 detecting a temperature of each seat, and a solar radiation sensor (not shown) corresponding to a solar radiation detecting element Moreover, the after-evaporator temperature sensor 74 detecting the air temperature immediately after passing the evaporator 41 (after-eva temperature TE) corresponding to an after-eva temperature detecting element, and a humidity sensor (not shown) detecting the relative humidity in the passenger compartment corresponding to a humidity detecting element are connected to the air-conditioner ECU 10.

Further, the air-conditioner ECU 10 sends and receives information mutually with the engine ECU 63 and a seating ECU 17 which detects occupant seating state through multiplex communication by cooperating with other ECU A water temperature sensor 75 is connected with the engine ECU 62, and detects the temperature of the cooling water of the engine of the vehicle as a water temperature detecting element, so as to correspond to the heating temperature of the blow-off air The air-conditioner ECU 10 acquires the water temperature through the engine ECU 63

Moreover, the air-conditioner ECU 10 controls ON/OFF of the seat heater 65 according to operation of the control panel 90. The air-conditioner ECU 10 always monitors the seat temperature based on the temperature detected by the seat temperature sensor 73 disposed on the surface of each seat, when the seat heater 65 is ON. The air-conditioner ECU 10 controls the seat heater 65 to switch ON/OFF in a manner that the seat has a fixed temperature.

Moreover, the seating ECU 17 is connected to a passenger seat seating sensor 77 and a passenger seat buckle sensor 78 The passenger seat seating sensor 77 is an electrical-contact type detecting element in which an electrical contact point is contacted by load applied to a seat surface when an occupant is seated on the passenger seat, or is a detecting element (strain gauge) which detects the amount of distortion by the load applied to the seat surface Therefore, the passenger seat seating sensor 77 corresponds to a load detector (weight detection sensor) detecting the load applied to the seat surface of the passenger seat. When the detected load is more than or equal to a predetermine value, the passenger seat seating sensor 77 outputs a signal to the seating ECU 17 which shows that the load is more than or equal to the predetermine value.

The passenger seat buckle sensor 78 is a sensor which detects whether the seat belt of the passenger seat is used or not Therefore, the passenger seat buckle sensor 78 corresponds to a belt detector which detects the use of the seat belt of the passenger seat. When the seat belt is used, the passenger seat buckle sensor 78 outputs a signal indicating the fastening state to the seating ECU 17

Signals are inputted into the seating ECU 17 from the passenger seat seating sensor 77 and the passenger seat buckle sensor 78, respectively. In other words, the passenger seat seating sensor 77 and the passenger seat buckle sensor 78 are connected with the seating ECU 17 in parallel When at least one of the passenger seat seating sensor 77 and the passenger seat buckle sensor 78 detects the seating, the seating ECU 17 determines that an occupant is seated on the passenger seat. Therefore, even if the seat belt is unfastened, for example, during a vehicle stopped time or a vehicle parked time, the seating can be detected by the passenger seat seating sensor 77 The air-conditioner ECU 10 acquires information about the seating state through the seating ECU 17

A temperature sensitive element such as thermistor is used for the inside air temperature sensor 71, the outside air temperature sensor 72, the after-evaporator temperature sensor, and the water temperature sensor 75. The inside air temperature sensor 71 is placed at a position near the driver seat (for example, inside the instrument panel 50 near a steering), hardly affected if air outlets other than the air outlet for the driver seat are closed. Moreover, the solar radiation sensor has a driver seat side solar radiation degree detecting element which detects the solar radiation amount (solar radiation degree) irradiated to the driver seat side air conditioning space, and a passenger seat side solar radiation degree detecting element which detects the solar radiation amount (solar radiation degree) irradiated to the passenger seat side air conditioning space, and is made of, for example, photodiode. The humidity sensor is accommodated in a recess formed in the front face of the instrument panel 50 near the driver seat, for example, together with the inside air temperature sensor 71, and is used for determining the necessity of the defroster blow-off for antifogging of the windshield

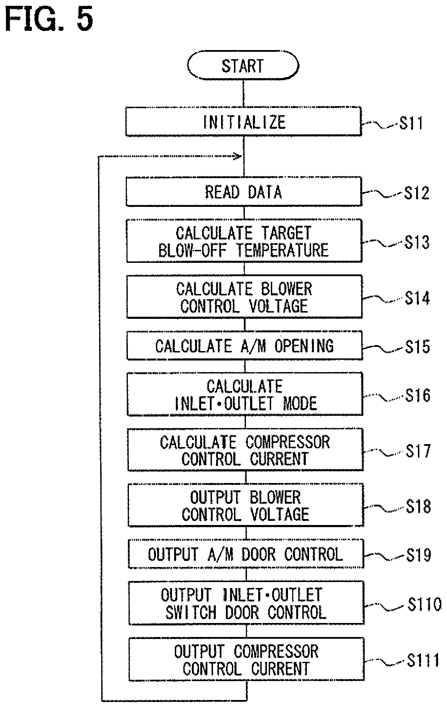

Next, a control method by the air-conditioner ECU 10 will be described with reference to FIG 5 FIG 5 is a flow chart illustrating one example of processing performed by the air-conditioner ECU 10 in a normal mode (all seat mode). First, when an ignition switch is turned on, a direct current power is supplied to the air-conditioner ECU 10, and the control program of FIG. 5 beforehand memorized in the memory will be executed.

At Step S11, the memory content of the memory for data processing disposed inside the microcomputer of the air-conditioner ECU 10 is initialized, and it is moved to Step S12 At Step S12, various data is read into the memory for data processing, and it is moved to Step S13. Therefore, at Step S12, the switch signals from the various operation switches on the control panel 90 and the sensor signals from the various sensors are inputted. The sensor signal may be the passenger compartment inside temperature Tr detected by the inside air temperature sensor 71, the outside air temperature Tam detected by the outside air temperature sensor 72, the solar radiation amount Ts detected by the solar radiation sensor, the after-eva temperature Te detected by the after-evaporator temperature sensor, and the cooling water temperature Tw detected by the water temperature sensor 75.

At Step S13, the input data is incorporated to the memorized computing equation so as to calculate the driver seat side target blow-off temperature TAO(Dr) and the passenger seat side target blow-off temperature TAO(Pa), and the target after-eva temperature TEO is calculated based on the driver seat side and passenger seat side target blow-off temperature TAO(Dr), TAO(Pa) and the outside air temperature Tam, and it is moved to Step S14

An example of the computing equation used at Step S13 is shown in the following expression 1.

$$\text{TAO} = \text{Kset} \times \text{Tset} - \text{Kr} \times \text{Tr} - \text{Kam} \times \text{Tam} - \text{Ks} \times \text{Ts} + \text{C} \quad \text{...(1)}$$

Here, Tset is a set temperature set through each temperature setting switch. Tr is an inside air temperature detected by the inside air temperature sensor 71 . Tam is an outside air temperature detected by the outside air temperature sensor 72. Ts is a solar radiation amount detected by the solar radiation sensor Kset, Kr, Kam and Ks are gains, and C is a correcting constant for the whole Therefore, the air-conditioner ECU 10 corresponds to a target blow-off temperature determination part which determines the target blow-off temperature using the air temperature detected by the inside air temperature sensor 71.

At Step S14, the blower air amount, i.e., the blower control voltage VA impressed to the blower motor 9, is calculated based on the calculated driver seat side and passenger seat side target blow-off temperature TAO(Dr), TAO(Pa), and it is moved to Step S15. The blower control voltage VA is obtained by calculating blower control voltages VA(Dr), VA (Pa) respectively suited to the driver seat side and passenger seat side target blow-off temperatures TAO(Dr), TAO(Pa) based on a predetermined characteristics pattern, and by performing an equalization treatment of the calculated blower control voltages VA(Dr), VA(Pa)

At Step S15, the driver seat side and passenger seat side target blow-off temperature TAO(Dr), TAO(Pa) and the input data in Step S12 are incorporated into the computing equation memorized in the memory, so as to calculate the air mix opening SW(Dr) (%) of the driver seat side air mixing door 15 and the air mix opening SW(Pa) (%) of the passenger seat side air mixing door 16, and it is moved to Step S16 Therefore, the air-conditioner ECU 10 corresponds to an air amount ratio determination part which determines the air mix opening using the target blow-off temperature

At Step S16, the air intake mode and the blow-off mode for the passenger compartment are determined based on the driver seat side and passenger seat side target blow-off temperature TAO(Dr), TAO(Pa) calculated at Step S13, and it is moved to Step S17

At Step S17, the ON/OFF of the compressor 45 is controlled by feedback control (PI control) in a manner that the driver seat side and passenger seat side target blow-off temperature TAO(Dr), TAO(Pa) calculated at Step S13 agrees with the actual after-eva temperature Te detected by the after-evaporator temperature sensor 74, and it is moved to Step S18

At Step S18, a control signal is outputted to the blower drive circuit 8 to apply the blower control current VA calculated at Step S14, and it is moved to Step S19 At Step S19, a control signal is outputted to the servo motor 17, 18 to have the air mix opening SW(Dr), SW(Pa) determined at Step S15, and it is moved to Step S110

At Step S110, a control signal is outputted to the servo motor 28, 29, 38, 39 to set the air intake mode and the blow-off mode determined at Step S16, and it is moved to Step S111. At Step S111, the ON/OFF control determined at Step S17 is outputted to the clutch drive circuit 45b, and it returns to Step S12 to repeat the processing Step S12 to Step S111 By repeating such a series of processes, the temperature of the passenger compartment set by the occupant can be achieved

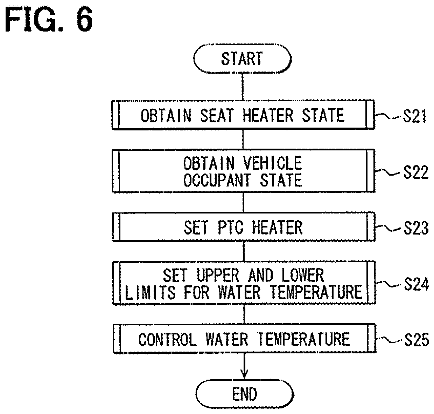

Next, an example of process controlling the temperature of cooling water performed by the air-conditioner ECU 10 will be descried with reference to FIG 6 FIG 6 is a flow chart illustrating an example of cooling water temperature control program performed by the air-conditioner ECU 10. The process shown in FIG 6 is carried out in parallel to the process shown in FIG. 5.

When the flow chart is started, at Step S21, the state of the seat heater 65 is obtained, and it moves to Step S22. The state of the seat heater 65 includes the working state of the seat heater 65, the installation state of the seat heater 65, and the like, at each seat. Details of Step S21 will be mentioned later.

At Step S22, the vehicle occupant state is obtained and it moves to Step S23. The vehicle occupant state represents seating (entrainment) information between occupants and seats, i e., on which seats the occupants are seated Details of Step S23 will be mentioned later

At Step S23, the state of the PTC heater 43 is obtained and it moves to Step S24. The state of the PTC heater 43 includes the working state of the PTC heater 43, the set output of the PTC heater 43, and the like Detailed processing for setting out the PTC heater 43 is mentioned later.

At Step S24, the upper limit and the lower limit are set for the water temperature, and it moves to Step S25 The intermittent permission water temperature represents a range within which the cooling water temperature is maintained in order to acquire the required heating capacity The intermittent permission water temperature is set based on the seat heater state acquired at Step S21, the vehicle occupant state acquired at Step S22, and the setting out of the PTC heater 43 acquired at Step S23 Detailed processing about the determination of the water temperature is mentioned later.

At Step S25, a process for controlling the cooling water temperature is carried out based on the intermittent permission water temperature, and the present flow chart is ended When the cooling water temperature is lower than the lower limit of the intermittent permission water temperature, an engine ON signal is output to the engine ECU 63 to require a start of the engine 60 Moreover, when the cooling water temperature is higher than the upper limit of the intermittent permission water temperature, an engine OFF signal is output to the engine ECU 63 to require a stop of the engine 60

By such temperature control for the cooling water temperature, the intermittent permission water temperature is set up based on the vehicle occupant state

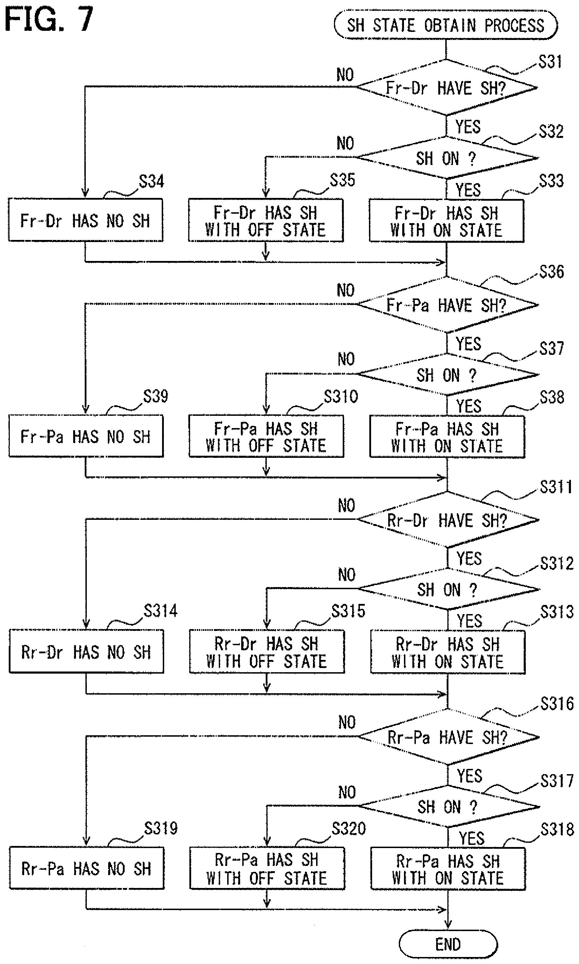

Next, the seat heater state obtaining process of Step S21 is explained using FIG. 7 FIG. 7 is a flow chart illustrating an example of the seat heater state obtaining process of the temperature control program. The process shown in FIG. 7 is started when the temperature control program of FIG 6 is executed,

When the flow chart is started, at Step S31, it is determined whether the seat heater 65 (SH) is installed in the driver seat (Fr-Dr) or not When it is installed, it moves to Step S32. When it is not installed, it moves to Step S34 At Step S34, because the seat heater 65 is not installed in the driver seat, information that the driver seat has no seat heater is memorized in the memory, and it moves to Step S36.

At Step S32, because the seat heater 65 is installed in the driver seat, it is determined whether the seat heater 65 is ON (in an operation) or not When it is operating, it moves to Step S33 When it is not operating, it moves to Step S35. At Step S35, because the seat heater 65 of the driver seat is OFF (under a stop), information that the driver seat has the seat heater 65 with OFF state is memorized in the memory, and it moves to Step S36, At Step S33, because the seat heater 65 of the driver seat is ON, information that the driver seat has the seat heater 65 with ON state is memorized in the memory, and it moves to Step S36.

At Step S36, it is determined whether the seat heater 65 is installed in the passenger seat (Fr-Pa) or not When it is installed, it moves to Step S37. When it is not installed, it moves to Step S39 At Step S39, because the seat heater 65 is not installed in the passenger seat, information that the passenger seat has no seat heater is memorized in the memory, and it moves to Step S311.

At Step S37, because the seat heater 65 is installed in the passenger seat, it is determined whether the seat heater 65 of the passenger seat is ON (in an operation) or not When it is operating, it moves to Step S38 When it is not operating, it moves to Step S310. At Step S310, because the seat heater 65 of the passenger seat is OFF (under a stop), information that the passenger seat has the seat heater 65 with OFF state is memorized in the memory, and it moves to Step S311. At Step S38, because the seat heater 65 of the passenger seat is ON, information that the passenger seat has the seat heater 65 with ON state is memorized in the memory, and it moves to Step S311

At Step S311, it is determined whether the seat heater 65 is installed in the rear seat behind the driver seat (Rr-Dr) or not When it is installed, it moves to Step S312. When it is not installed, it moves to Step S314 At Step S314, because the seat heater 65 is not installed in the rear seat behind the driver seat, information that the rear seat behind the driver seat has no seat heater is memorized in the memory, and it moves to Step S316

At Step S312, because the seat heater 65 is installed in the rear seat behind the driver seat, it is determined whether the seat heater 65 of the rear seat behind the driver seat is ON (in an operation) or not. When it is operating, it moves to Step S313. When it is not operating, it moves to Step S315. At Step S315, because the seat heater 65 of the rear seat behind the driver seat is OFF (under a stop), information that the rear seat behind the driver seat has the seat heater 65 with OFF state is memorized in the memory, and it moves to Step S316 At Step S313, because the seat heater 65 of the rear seat behind the driver seat is ON, information that the rear seat behind the driver seat has the seat heater 65 with ON state is memorized in the memory, and it moves to Step S316.

At Step S316, it is determined whether the seat heater 65 is installed in the rear seat behind the passenger seat (Rr-Pa) or not. When it is installed, it moves to Step S317. When it is not installed, it moves to Step S319 At Step S319, because the seat heater 65 is not installed in the rear seat behind the passenger seat, information that the rear seat behind the passenger seat has no seat heater is memorized in the memory, and the present flow chart is ended

At Step S317, because the seat heater 65 is installed in the rear seat behind the passenger seat, it is determined whether the seat heater 65 of the rear seat behind the passenger seat is ON (in an operation) or not When it is operating, it moves to Step S318. When it is not operating, it moves to Step S320. At Step S320, because the seat heater 65 of the rear seat behind the passenger seat is OFF (under a stop), information that the rear seat behind the passenger seat has the seat heater 65 with OFF state is memorized in the memory, and the present flow chart is ended. At Step S318, because the seat heater 65 of the rear seat behind the passenger seat is ON, information that the rear seat behind the passenger seat has the seat heater 65 with ON state is memorized in the memory, and the present flow chart is ended.

Thus, in the seat heater state obtaining process shown in FIG. 7, the state of the seat heater 65 is obtained and the obtained state is memorized in the memory Moreover, by determining the presence or absence of the seat heater, the seat heater state obtaining process can be made common in each of vehicles equipped with the seat heater 65 and vehicles not equipped with the seat heater 65.

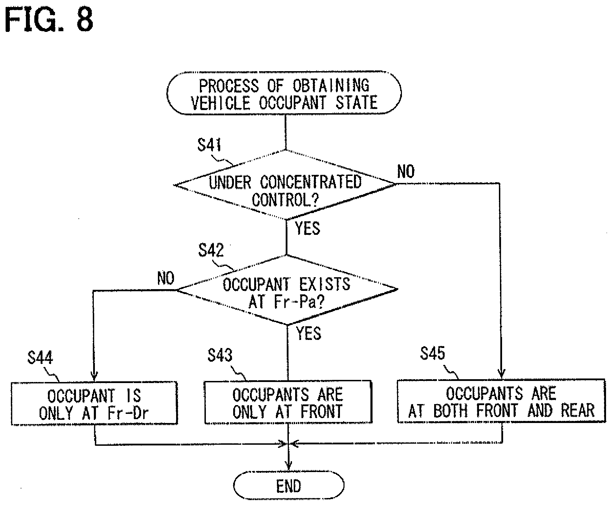

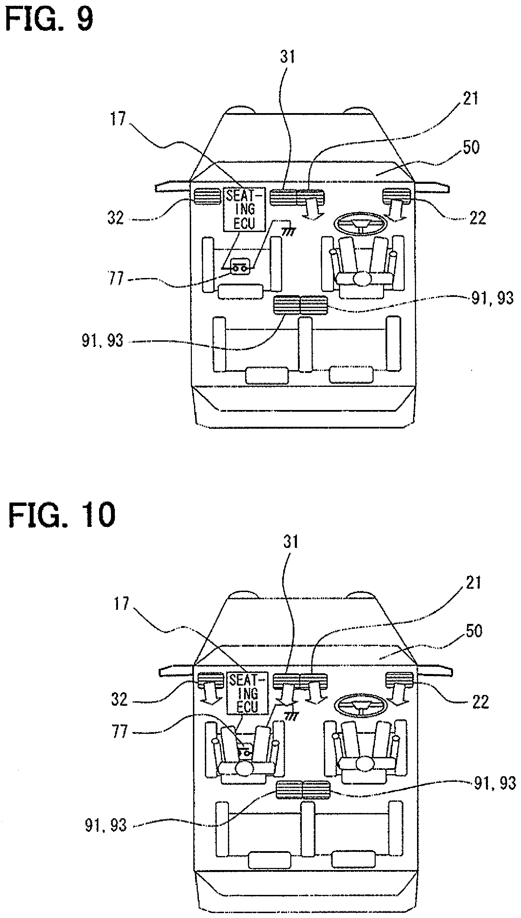

Next, the vehicle occupant state obtaining process of Step S22 is explained with reference to FIGS 8-10 FIG. 8 is the flow chart illustrating an example of the vehicle occupant state obtaining process of the temperature control program FIG 9 is a schematic view illustrating the inside of the passenger compartment at the concentrated control mode FIG. 10 is a schematic view illustrating the inside of the passenger compartment at the front seat mode. The process shown in FIG. 8 is started when Step S22 of FIG 6 is executed.

When the flow chart is started, at Step S41, it is determined whether the present mode is in the concentrated control mode (under centralized control) or not When it is in the concentrated control mode, it moves to Step S42. When it is not in the concentrated control mode, it moves to Step S45. The determination of the concentrated control mode is conducted based on the operation of the concentrated control switch 55 to turn ON the concentrated control mode In the concentrated control mode, at least one predetermined seat is air-conditioned in the concentrated state, of the seats (all the seats). In the present embodiment, the predetermined seat is set to the driver seat or the front seat (constructed by the driver seat and the passenger seat)

At Step S42, while the concentrated control mode is being performed, it is determined whether an occupant is seated on the passenger seat or not When an occupant is seated, it moves to Step S43. When no occupant is seated, it moves to Step S44. The determination of the seating is performed based on the information provided from the seating ECU 17

At Step S43, because an occupant exists in the passenger seat under the concentrated control mode, it is determined that occupants are only in the front seat, and it shifts to the front seat mode at which the air conditioning range is set only for the front seat. Further, information that occupants are in the front seat is memorized in the memory, and the present flow chart is ended. Since the occupants are only the driver and the passenger seat occupant, the air intake mode and the blow-off mode are changed to "the front seat mode" as a mode at which the temperature control is performed for the front seat space For example, the air intake mode is set as the inside air mode, such that the inside air inlet port 6, which is located on the lower part of the driver seat side and the lower part of the passenger seat side, is opened by the inside-and-outside air switch door 3. Moreover, all the air outlets of the rear seat air conditioning space in which no occupant is present are closed by the corresponding doors. For example, as shown in FIG 2, the rear seat side center face air outlet 91 (the arrow directions C1, C2 in FIG 2), the rear seat side face air outlet 92 (the arrow direction D1 in FIG. 2) and the rear seat side foot air outlet 93 (the arrow directions F1, F2 in FIG. 2) are closed, and the residual air outlets 20, 21, 22, 23, 30, 31, 32, 33 (the arrow directions A1, A2, B1, B2, E1, E2, G1, G2, H1 in FIG. 2) are opened. Moreover, for example, as shown in FIG 10, the air intake mode and the blow-off mode are set into "the front seat mode", such that air outlets 91, 93 are closed and that the residual air outlets 21, 22, 31, 32 are opened, so as to limit the air conditioning range to the front seat In addition, although only the arrow directions D1, H1 are shown in FIG. 2, there shall be a flow of conditioned-air on the passenger seat side similarly in the arrow directions D2, H2,

At Step S44, because no occupant exists in the passenger seat under the concentrated control mode, it is determined that an occupant is only in the driver seat, and it shifts to the concentrated control mode at which the air conditioning range is set only for the driver seat Further, information that an occupant is only in the driver seat is memorized in the memory, and the present flow chart is ended. Since the occupant is only the driver, the air intake mode and the blow-off mode are changed to "the concentrated control mode" as a mode at which the temperature control is performed for the driver seat space. For example, the air intake mode is set as the inside air mode, such that the inside air inlet port 6, which is located on the lower part of the driver seat side, is opened by the inside/outside air switch door 3 Moreover, all the air outlets 30-33 of the passenger seat side air conditioning space, in which no occupant is present, are closed by the corresponding doors 34-36 For example, as shown in FIG 2, the air outlets 30, 31, 32, 33, 91, 92, 93 surrounded with the imaginary line are closed, and the air outlets 20, 21, 22, 23 surrounded with the continuous line are opened Moreover, for example, as shown in FIG 9, the air intake mode and the blow-off mode are set into "the concentrated control mode", such that the air outlets 31, 32, 91, 93 are closed, and that the residual air outlets 21, 22 are opened, so as to limit the air conditioning range to the driver seat

At Step S45, since the concentrated control mode is not carried out, it is determined that at least one occupant is present in the rear seat Information that occupants are present at least in the driver seat and the rear seat is memorized in the memory, and the present flow chart is ended.

Thus, in the vehicle occupant information obtaining process shown in FIG. 8, the vehicle occupant state is obtained to determine one among three states that are (1) an occupant is only in the driver seat, (2) occupants are only in the front seat or (3) the other (for example, at least one occupant is further present in the rear seat) and the determination result is memorized in the memory

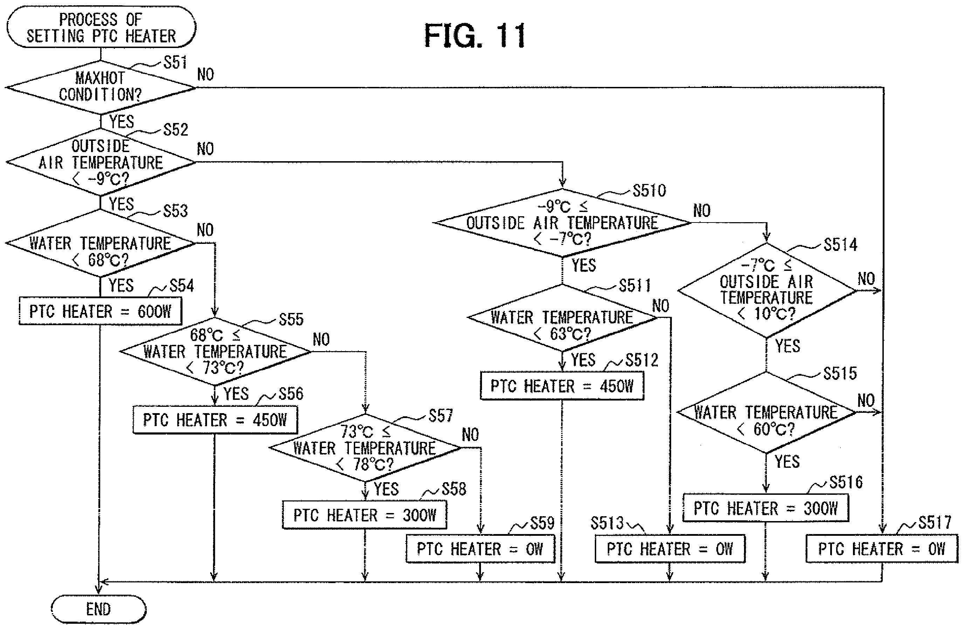

Next, the PTC heater setting process of step S23 will be described with reference to FIG. 11. FIG. 11 is a flow chart illustrating an example of the PTC heater setting process of the temperature control program The process shown in FIG. 11 is started when Step S23 of FIG. 6 is executed.

When the present flow chart is started, at Step S51, it is determined whether a MAXHOT condition is satisfied or not. When it is satisfied, it moves to Step S52 When it is not satisfied, it moves to Step S517. The MAXHOT condition is satisfied when the maximum heat load is demanded Therefore, when the MAXHOT condition is satisfied, the maximum heating capacity is necessary for a heating operation. The heat amount is not shorted at Step S517 because the MAXHOT condition is not satisfied, the Wattage number of the PTC heater 43 is set as 0W (namely, stop), and the present flow chart is ended

At Step S52, it is determined whether the outside air temperature is less than -9°C. When it is less than -9°C, it moves to Step S53. When it is not less than -9°C, it moves to Step S510 At Step S53, it is determined whether the cooling water temperature is less than 68°C. When it is less than 68°C, it moves to Step S54 When it is not less than 68°C, it moves to Step S55. At Step S54, since the outside air temperature and the cooling water temperature are low, the Wattage number of the PTC heater 43 is set as 600W which is the maximal level, and the present flow chart is ended

At Step S55, it is determined whether the cooling water temperature is higher than or equal to 68°C and is less than 73°C When it is higher than or equal to 68°C and is less than 73°C, it moves to Step S56. When it is not less than 73°C, it moves to Step S57. At Step S56, since the outside air temperature is low and the cooling water temperature is comparatively low, the Wattage number of the PTC heater 43 is set as 450W which is the middle level, and the present flow chart is ended

At Step S57, it is determined whether the cooling water temperature is higher than or equal to 73°C and is less than 78°C When it is higher than or equal to 73°C and is less than78°C, it moves to Step S58. When it is not less than 78°C, it moves to Step S59, At Step S58, although the outside air temperature is low, the cooling water temperature is comparatively high, so the Wattage number of the PTC heater 43 is set as 350W which is the minimum level, and the present flow chart is ended. At Step S59, although the outside air temperature is low, the cooling water temperature is high, so it is determined that the heat amount is not shorted The Wattage number of the PTC heater 43 is set as 0W (namely, stop), and the present flow chart is ended

At Step S510, it is determined whether the outside air temperature is higher than or equal to -9°C and is less than -7°C. When it is higher than or equal to -9°C and is less than -7°C, it moves to Step S511 When it is not less than -7°C, it moves to Step S514. At Step S511, it is determined whether the cooling water temperature is less than 63°C. When it is less than 63°C, it moves to Step S512. When it is not less than 68°C, it moves to Step S513 At Step S512, since the outside air temperature is comparatively low and the cooling water temperature is also comparatively low, the Wattage number of the PTC heater 43 is set as 450W which is the middle level, and the present flow chart is ended. At Step S513, although the outside air temperature is comparatively low, the cooling water temperature is high, so it is determined that the heat amount is not shorted The Wattage number of the PTC heater 43 is set as 0W (namely, stop), and the present flow chart is ended.

At Step S514, it is determined whether the outside air temperature is higher than or equal to -7°C and is less than 10°C When it is higher than or equal to -7°C and is less than 10°C, it moves to Step S515 When it is not less than 10°C, it moves to Step S517 At Step S515, it is determined whether the cooling water temperature is less than 60°C. When it is less than 60°C, it moves to Step S516. When it is not less than 68°C, it moves to Step S517 At Step S516, although the outside air temperature is comparatively high, the cooling water temperature is low, so the Wattage number of the PTC heater 43 is set as 300W which is the minimum level, and the present flow chart is ended At Step S517, it is determined that the heat amount is not shorted, so the Wattage number of the PTC heater 43 is set as 0W (namely, stop), and the present flow chart is ended

Thus, in the PTC heater setting process shown in FIG. 9, the output of the PTC heater 43 is set as 0W, 300W, 450W or 600W based on the outside air temperature and the cooling water temperature. The set-up value is memorized in the memory

Therefore, when the ignition is turned on and when the air-conditioner ECU 10 is set as AUTO at a very low outside air temperature (for example, -9°C or less) and a low water temperature (for example, 68°C or less) in winter, the MAXHOT condition is satisfied and the maximum heating capacity is expected, so the PTC heater 43 has the upper limit Wattage number (for example, 600W). However, when the water temperature is raised at the same outside air temperature, the thermal load of the heating operation is decreased. Therefore, the Wattage number of the PTC heater 43 is proportionally reduced (in order of 450W, 300W and 0W), so as to balance the heating effect and the practical fuel consumption Moreover, when not only the cooling water temperature but also the outside air temperature is raised (for example, higher than or equal to -9°C and less than 7°C), since the thermal load is decreased, the upper limit is lowered (450W).

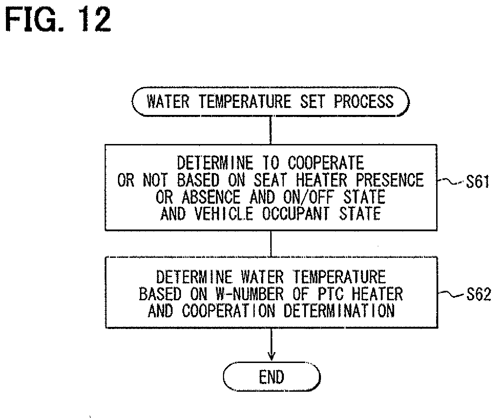

Next, the water temperature setting process of step S24 will be described with reference to FIG. 12 FIG 12 is the flow chart illustrating an example of the intermittent permission water temperature setting process of the temperature control program. The process shown in FIG. 12 is started when Step S24 of FIG. 6 is executed.

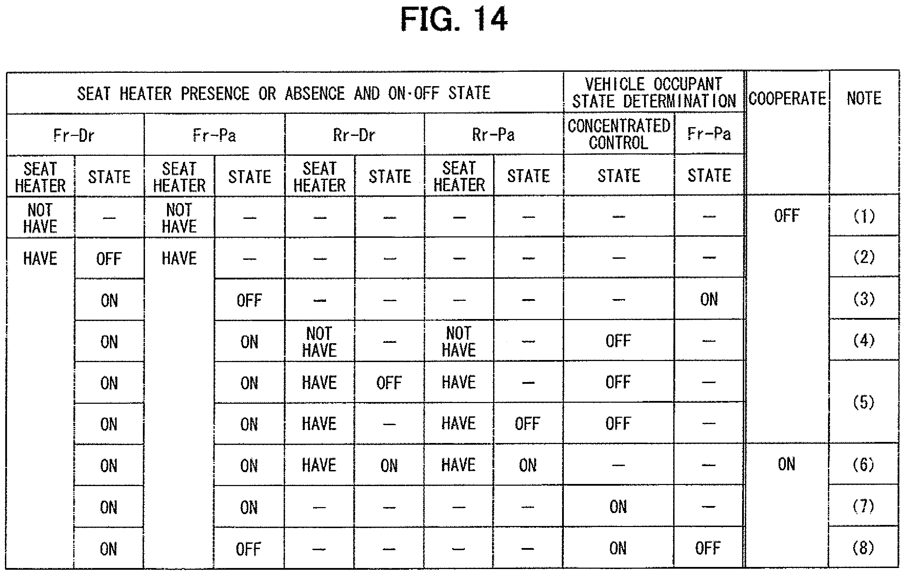

When the flow chart is started, at Step S61, the seat heater state and the vehicle occupant state are read from the memory, and it is determined whether it is possible to cooperate with the seat heater 65 or not, and moves to Step S62. The cooperation with the seat heater 65 is possible when the seat heater 65 is ON, that is a case where the heating effect of the seat heater 65 can be added to the heat amount of the heater core 42 and the PTC heater 43 Specifically, to cooperate or not is determined based on a control map which is memorized beforehand in the memory. FIG 14 is a cooperation determining table used at Step S61 In FIG. 14, "-" represents a portion which is not related to the determination conditions.

As shown in FIG 14, when the seat heater 65 is ON at all the seats, because the heat amount from the seat heater 65 is large, it is determined that the heating effect should be added (by the cooperation) Moreover, when the concentrated control is ON (front seat mode), that is when the seat heater 65 is ON only at the front seat, it is determined that the heating effect should be added (by the cooperation) because the heat amount emitted from the seat heater 65 is large, and because the air conditioning range is narrow only at the front seat Furthermore, when the concentrated control is ON (concentrated control mode), that is when the seat heater 65 is ON only at the driver seat, it is determined that the heating effect should be added (by the cooperation) because the heat amount emitted from the seat heater 65 is large, and because the air conditioning range is narrow only at the driver seat

As shown in FIG. 14, in seven patterns other than the above three patterns (combinations of the conditions) having the cooperation, because it is determined that the heat amount emitted form the seat heater 65 is insufficient, the cooperation is not performed

Therefore, after the presence or absence of the seat heater 65, the ON-OFF state of the seat heater 65, and the vehicle occupant state are input, the air-conditioner ECU 10 determines to perform the cooperation or not based on the status of the seat heater 65 and the vehicle occupant state. A method of determining whether to cooperate or not is described in NOTE of FIG. 14 and is referred as following. The cooperation is not performed in the following conditions (1) to (5)

  (1) The cooperation is not performed when the seat heater is not installed in Fr-Dr

  (2) The cooperation is not performed when the seat heater is OFF, even while Fr-Dr has the seat heater.

  (3) The cooperation is not performed when the seat heater is OFF, even while Fr-Pa has the seat heater, similarly.

  (4) The cooperation is not performed when Rr-Dr and Rr-Pa do not have the seat heater in a case where the concentrated control is OFF (= at least one occupant is present in the rear seat)

  (5) The cooperation is not performed when the seat heater is OFF in Rr-Dr or Rr-Pa in a case where the concentrated control is OFF (= at least one occupant is present in the rear seat)

Thus, the cooperation is not performed in the conditions (1) to (5) because the comfortableness cannot be maintained for an occupant or occupants.

In contrast, the cooperation is performed in the following conditions (6) to (8).

(6) The cooperation is performed when the seat heater is ON at the all of the seats

(7) The cooperation is performed when the seat heater is ON at Fr-Pa in a case where the concentrated control is ON (= no occupant is present in the rear seat).

(8) The cooperation is performed when the seat heater is OFF at Fr-Pa where no occupant is seated in a case where the concentrated control is ON (= no occupant is present in the rear seat),

Thus, the cooperation is performed in the conditions (6) to (8) because the comfortableness can be maintained for an occupant or occupants.

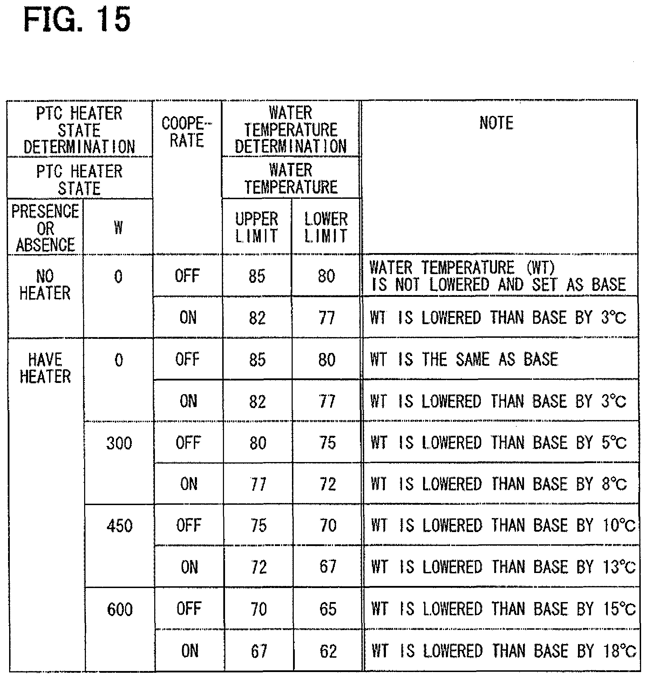

At Step S62, the upper limit and the lower limit are set for the water temperature based on the determination to cooperate or not and the set Wattage number of the PTC heater 43 read from the memory, and the present flow chart is ended. Specific setting out of the PTC heater 43 is determined based on a control map which is memorized beforehand in the memory. FIG. 15 illustrates the PTC heater setting map used at Step S62,

As shown in FIG. 15, as the set Wattage number of the PTC heater 43 is increased, the heat amount emitted from the PTC heater 43 can be added more to the heat source of the cooling water Therefore, as the Wattage number of the PTC heater 43 is increased, the water temperature can be made lower, Moreover, when there is a cooperation with the seat heater 65, the water temperature can be further made lower at the same Wattage number of the PTC heater 43. Thus, the upper limit and the lower limit can be set for the water temperature based on the set Wattage number and the cooperation of the PTC heater 43. When the set Wattage number of the PTC heater 43 is 600W which is the maximal level with the cooperation, the upper limit is set as 67°C and the lower limit is set as 62°C for the water temperature, Therefore, compared with the case where the PTC heater 43 is stopped (0W), the cooling water temperature can be lowered by 18°C.

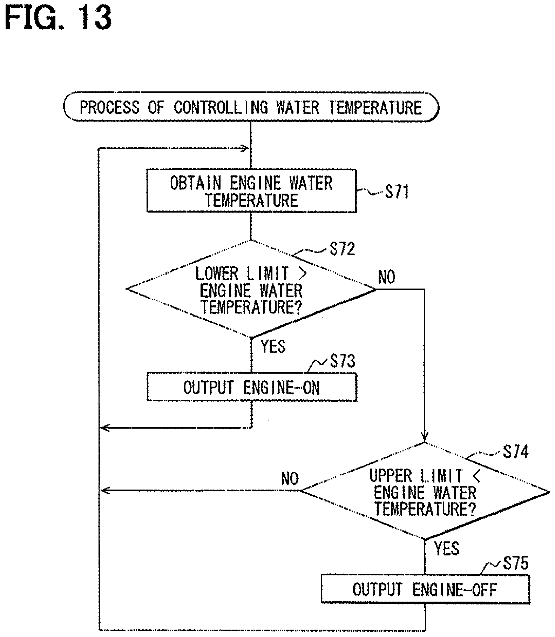

Next, the water temperature control process of step S25 will be described with reference to FIG. 13. FIG. 13 is a flow chart illustrating an example of the water temperature control process of the temperature control program The process shown in FIG. 13 is started when Step S25 of FIG. 6 is executed,

When the flow chart is started, at Step S71, the cooling water temperature is obtained by the multiplex communication from the EFI ECU (engine ECU 63), and it moves to Step S72. At Step S72, the acquired cooling water temperature is compared with the set lower limit of the water temperature When the cooling water temperature is lower than the lower limit, it moves to Step S73. When the cooling water temperature is not lower than the lower limit, it moves to Step S74.

At Step S73, since the cooling water temperature is low, it is necessary to heat the cooling water, so the engine ON signal is outputted to the engine ECU 63 to require a start of the engine 60, and it returns to Step S71.

At Step S74, the acquired cooling water temperature is compared with the set upper limit of the water temperature When the cooling water temperature is higher than the upper limit, it moves to Step S75. When the cooling water temperature is not higher than the upper limit, it returns to Step S71 When the cooling water temperature is not higher than the upper limit, the cooling water temperature is between the upper limit and the lower limit

At Step S75, since the cooling water temperature is high, it is not necessary to heat the cooling water, so the engine OFF signal is outputted to the engine ECU 63 to require a stop of the engine 60, and it returns to Step S71

Thus, in the water temperature control process shown in FIG. 13, by outputting the engine ON signal or the engine OFF signal, it is possible to control the cooling water temperature to be between the upper limit and the lower limit.

As explained above, the air-conditioner 100 according to the present embodiment includes the heater core 42 (main heating element) to heat air sent from the air-conditioning blower and the seat heater 65 (auxiliary heating element) to heat the inside of the passenger compartment The cooling water of the engine 60 is the heat source of the heater core 42, and the seat heater 65 generates heat by electric power not using the waste heat of the engine 60 Therefore, the heat source is different between the heater core 42 and the seat heater 65. When the heat source of the heater core 42 is insufficient, the insufficiency can be compensated with the seat heater 65. Such the heater core 42 and the seat heater 65 are controlled by the air-conditioner ECU 10 When it is determined that the temperature of the cooling water of the engine 60 is lower than a threshold (the lower limit of the intermittent permission water temperature), the air-conditioner ECU 10 outputs the engine ON signal which requires the start up of the engine 60 as a demand signal. When the engine 60 is started, the cooling water is heated by the waste heat of the engine 60 Therefore, by outputting the demand signal, the air-conditioner ECU 10 can secure the heat source for a heating operation by raising the temperature of the cooling water of the engine 60 more than or equal to the threshold

Moreover, in the normal state (without the cooperation) where the conditioned-air is blown off to the predetermined seat and the other seat, the air-conditioner ECU 10 lowers the threshold (intermittent permission water temperature) according to the increase in the heat amount emitted from the seat heater 65 based on the operating state of the seat heater 65 (refer to FIG 14) In the present embodiment, the intermittent permission water temperature is lowered stepwise according to the increase amount in the heat emitting amount. Therefore, as the heat amount emitted from the seat heater 65 is increased, it becomes difficult to determine the temperature of the cooling water of the engine 60 to be lower than the threshold, so it becomes difficult to output the demand signal which requires the start up of the engine 60. Thereby, because the heat amount emitted from the seat heater 65 is considered in the normal state, it becomes difficult to start the engine 60. Therefore, the fuel consumption can be reduced while the heating performance is secured

Moreover, the air-conditioner ECU 10 controls each door to the intercepted state, as a control of a predetermined seat state, when the predetermined seat air conditioning command is provided to air-condition the predetermined seat. Due to the intercepted state, the conditioned-air can be sent only to the predetermined occupant who is seated on the predetermined seat Therefore, since the air conditioning range becomes narrow compared with the normal state, the air conditioning capacity can be reduced. Moreover, in the predetermined seat state, the air-conditioner ECU 10 further lowers the threshold rather than the threshold adjusted in the normal state (refer to FIG. 14) Therefore, in the predetermined seat state, as the heat amount emitted from the seat heater 65 is increased, it becomes more difficult to determine the temperature of the cooling water of the engine 60 to be lower than the threshold compared with the normal state, so it becomes difficult to output the demand signal which requires the start up of the engine 60 Thereby, the start up of the engine 60 becomes further hard to be performed, in the predetermined seat state, because the air conditioning range becomes narrow and because the heat amount emitted from the seat heater 65 is taken into consideration. Therefore, the fuel consumption can be reduced while the heating performance is secured

Moreover, in the present embodiment, the control panel 90 is further included as an input unit for inputting the predetermined seat air conditioning command When an occupant operates the concentrated control switch 55 of the control panel 90, the normal state control can be shifted to the control of the predetermined seat state Therefore, the control of the predetermined seat state can be carried out at a suitable timing by an occupant without using a sensor which detects an occupant Thus, the air-conditioner 100 is realizable with a simple structure without the sensor which detects an occupant so as to be shifted to the control of the predetermined seat state.

Moreover, in the present embodiment, when it is determined that an occupant is seated only in the predetermined seat based on the detection result of the passenger seat seating sensor 77 and the passenger seat buckle sensor 78 which correspond to an occupant detector, the predetermined seat can be air-conditioned automatically in the concentrated state. Since the operation by an occupant becomes unnecessary by this, the convenience can be improved in the operation.

Moreover, in the present embodiment, the occupant detector corresponds to the passenger seat seating sensor 77 and the passenger seat buckle sensor 78 Therefore, the presence of absence of occupant at the passenger seat is detected by the two sensors The air-conditioner ECU 10 determines that an occupant exists in the passenger seat when the fastening of the seat belt is detected by the passenger seat buckle sensor 78 or when the seating is detected by the passenger seat seating sensor 77 Therefore, even when the fastening of the seat belt at the passenger seat is not detected, if the seating is detected by the passenger seat seating sensor 77, it is determined that an occupant exists at the passenger seat. Thus, an occupant can be detected by the passenger seat seating sensor 77 even when the seat belt is not fastened, for example, while the vehicle is stopped, and the detection accuracy can be improved.

Moreover, in the present embodiment, the occupant detector is prepared only in the passenger seat. The process shown in FIG. 6 is executed only when the ignition is turned on Therefore, it can be determined that an occupant is in the driver seat when the ignition is turned on That is, the occupant detector is unnecessary for the driver seat. Moreover, the control actuated with the concentrated control switch 55 is based on a premise that no occupant is seated on the rear seat Therefore, the presence or absence of occupant at the rear seat can be detected by the ON/OFF state of the concentrated control switch 55. That is, the occupant detector is unnecessary for the rear seat. Thus, the vehicle occupant state can be detected at the driver seat and the rear seat even when the occupant detector is provided only at the passenger seat.

The effects and advantages of the present embodiment are described in other words The vehicle occupant state of the driver seat (Fr-Dr seat), the passenger seat (Fr-Pa seat), and the rear seat (Rr seat) is detected with the passenger seat seating sensor 77 and the passenger seat buckle sensor 78 connected in parallel with each other and the concentrated control switch 55 Then, the water temperature is lowered stepwise based on the combination condition between the vehicle occupant state of the driver seat, the passenger seat, and the rear seat, and the ON/OFF state of the seat heater 65, while the water temperature is uniformly lowered in the conventional art Thus, both the occupant comfortableness and the saving in the fuel consumption can be achieved while the air conditioning is performed, compared with the conventional art Therefore, in the present embodiment, both the occupant comfortableness and the saving in the fuel consumption can be achieved when the seat heater 65 is working on even if the water temperature is lowered in the heater core 42.

In a case where the passenger seat buckle sensor 78 and the passenger seat seating sensor 77 are connected in series, the seating cannot be detected when the passenger seat buckle is unfastened during a break (under a vehicle stop) However, according to the present embodiment, the passenger seat buckle sensor 78 and the passenger seat seating sensor 77 are connected in parallel, so the present control can be performed when the passenger seat buckle is unfastened during a break Therefore, the frequency of performing the fuel-saving control can be increased while the passenger seat buckle is unfastened during a break

The present disclosure is described above, and is not limited to the above embodiment Changes and modifications are to be understood as being within the scope of the present disclosure

In the above embodiment, the water temperature is stepwise lowered according to the increase in the heat emitting amount Alternatively, the threshold may be gradually not stepwise lowered as the heat emitting amount is increased

In the above embodiment, when the concentrated control switch 55 is pushed, it is determined that no occupant exists in the rear seat, alternatively, an occupant detector may be prepared in the rear seat so as to detect the seating state of the rear seat. In other words, in the embodiment, an occupant detector is prepared only at the passenger seat, and it is not prepared in the other seats, but it may be prepared in all the seats without restrict to such composition Moreover, although the seating sensor and the buckle sensor arranged on the seat are used as the occupant detector in the above embodiment, existence or nonexistence of an occupant may be detected for each seat by IR (non-contact infrared temperature) sensor arranged to the instrument panel Moreover, the existence or nonexistence of the occupant for each seat may be presumed using the open or close signal of the door for each seat, and the existence or nonexistence of the occupant for each seat may be determined combining these means.

Moreover, in the above embodiment, the auxiliary heating element is the PTC heater 43 and the seat heater 65, alternatively, it may be a steering heater in place of the PTC heater 43 or the seat heater 65 Moreover, the PTC heater 43 may be a water overheating heater or a combustion type heater,

In the above embodiment, although the actuator is realized by the servo motor, the actuator may be the residual actuator such as bimetal and shape memory alloy without limited to the servo motor,

It is understood that the present disclosure is not limited to the embodiment concerned and structure The present disclosure also includes various modifications within the scope of the invention as claimed.

**Claims**

**1.** An air-conditioner for a vehicle comprising:

an air conditioning case (2) having an air intake port (6, 7) on a first side and a plurality of air outlets on a second side, air passing through the plurality of air outlets toward a passenger compartment, the plurality of air outlets (20-23, 30-33, 91-93) being opened to correspond to a plurality of seats including a predetermined seat or predetermined seats, **said predetermined seat or predetermined seats being** a driver seat (Fr-Dr), **or a driver seat (Fr-Dr) and** a front passenger seat (Fr-Pa), **the plurality of seats further including** another seat, the air conditioning case (2) having an air passage between the air intake port and the plurality of air outlets, blow-off air passing through the air passage;
an air conditioning blower (13) sending air to the air passage of the air conditioning case;
an air conditioning part (41, 42) having a main heating element (42) which heats air sent from the air conditioning blower using cooling water of an engine (60) as a heat source, the air conditioning part sending conditioned-air to the plurality of air outlets;
an auxiliary heating element (43, 65) having a heat source other than waste heat of the engine for a heating operation, wherein the auxiliary heating element includes a first heater (43) which heats air sent from the air conditioning blower using electric power as the heat source, and
a second heater (65) arranged to each of the predetermined seat and the other seat to individually heat each of the predetermined seat and the other seat using electric power as the heat source;
an opening-and-closing part (34-36) which changes opening-and-closing state of the plurality of air outlets between an allowed state and an intercepted state, conditioned-air being allowed to pass an air outlet of the plurality of air outlets which air-conditions the other seat except the predetermined seat in the allowed state and being intercepted in the intercepted state, conditioned-air being allowed to pass an air outlet of the plurality of air outlets which air-conditions the predetermined seat in the intercepted state and the allowed state;
a water temperature detector (75) which detects a temperature of the cooling water; and
a control part (10) which conducts an air conditioning for the passenger compartment by controlling the main heating element and the auxiliary heating element based on the temperature of the cooling water detected by the water temperature detector, wherein the control part outputs a demand signal demanding the engine to start when it is determined that the water temperature is lower than a threshold,
the control part lowers the threshold in accordance with an increase in a heat amount emitted from the auxiliary heating element based on an operation state of the auxiliary heating element, in the allowed state where the conditioned-air is blown off to the predetermined seat and the other seat,
the control part controls the opening-and-closing part into the intercepted state, and further lowers the threshold comparing with the threshold controlled in the allowed state as a control of a predetermined seat state when a predetermined seat air conditioning command is provided to air-condition the predetermined seat,_and in the control of the predetermined seat state, the control part activates the second heater (65) for the predetermined seat, and lowers the threshold as a heat amount emitted from the second heater (65) is increased.

2. The air-conditioner according to claim 1, further comprising:
an input unit (90) through which the predetermined seat air conditioning command is input.

3. The air-conditioner according to claim 1 or 2, further comprising:

an occupant detector (77, 78) which detects a presence or absence of an occupant on at least one seat of the plurality of seats, wherein
the control part executes the control of the predetermined seat state when it is determined that an occupant is present only in the predetermined seat based on a detection result of the occupant detector.

4. The air-conditioner according to claim 3, wherein
the occupant detector includes
a belt detector (78) which detects a fastening of a seat belt provided to the at least one seat, and
a load detector (77) which detects a load added to a surface of a seat to which the belt detector is provided, and
the control part determines that an occupant is present in the seat when the belt detector detects the fastening of the seat belt or when the load detector detects a load which is larger than or equal to a predetermined value.

**Patentansprüche**

1. Klimaanlage für ein Fahrzeug, umfassend:

ein Klimagehäuse (2) mit einer Luftansaugöffnung (6, 7) auf einer ersten Seite und einer Mehrzahl von Luftauslässen auf einer zweiten Seite, wobei Luft durch die Mehrzahl von Luftauslässen zu einem Fahrgastraum hindurchtritt, wobei die Mehrzahl von Luftauslässen (20-23, 30-33, 91-93) geöffnet werden, um einer Mehrzahl von Sitzen zu entsprechen, die einen vorbestimmten Sitz oder vorbestimmte Sitze umfassen, wobei der vorbestimmte Sitz oder die vorbestimmten Sitze ein Fahrersitz (Fr-Dr) oder ein Fahrersitz (Fr-Dr) und ein Beifahrersitz (Fr-Pa) sind, wobei die Mehrzahl von Sitzen ferner einen weiteren Sitz umfasst, wobei das Klimatisierungsgehäuse (2) einen Luftdurchgang zwischen der Luftansaugöffnung und der Mehrzahl von Luftauslässen aufweist, wobei Abluft durch den Luftdurchgang strömt;
ein Klimaanlagengebläse (13), das Luft zu dem Luftdurchgang des Klimaanlagengehäuses sendet;
einen Klimatisierungsteil (41, 42) mit einem Hauptheizelement (42), das von dem Klimaanlagengebläse gesendete Luft unter Verwendung von Kühlwasser eines Motors (60) als eine Wärmequelle erwärmt, wobei der Klimatisierungsteil klimatisierte Luft zu den mehrere Luftauslässen sendet;
ein Hilfsheizelement (43, 65) mit einer anderen Wärmequelle als Abwärme des Motors für einen Heizbetrieb, wobei das Hilfsheizelement umfasst
eine erste Heizeinrichtung (43), die Luft erwärmt, die von dem Klimaanlagengebläse unter Verwendung von elektrischer Energie als die Wärmequelle gesendet wird, und
eine zweite Heizeinrichtung (65), die sowohl an dem vorbestimmten Sitz als auch an dem anderen Sitz angeordnet ist, um jeweils den vorbestimmten Sitz und den anderen Sitz unter Verwendung von elektrischer Energie als Wärmequelle individuell zu erwärmen;
ein Öffnungs- und Schließteil (34-36), das den Öffnungs- und Schließzustand der Mehrzahl von Luftauslässen zwischen einem erlaubten Zustand und einem unterbundenen Zustand ändert, wobei erlaubt wird, dass in dem erlaubten Zustand klimatisierte Luft durch einen Luftauslass der Mehrzahl von Luftauslässen strömt, die den anderen Sitz mit Ausnahme des vorbestimmten Sitzes klimatisiert, und in dem unterbundenen Zustand unterbunden wird, wobei in dem unterbundenen Zustand und in dem erlaubten Zustand klimatisierter Luft erlaubt wird, durch einen Luftauslass der Mehrzahl von Luftauslässen zu strömen, die den vorbestimmten Sitz klimatisiert;
einen Wassertemperaturdetektor (75), der eine Temperatur des Kühlwassers erfasst; und
einen Steuerteil (10), der eine Klimatisierung für den Fahrgastraum durch Steuern des Hauptheizelements und des Hilfsheizelements basierend auf der durch den Wassertemperaturdetektor erfassten Temperatur des Kühlwassers ausführt, wobei der Steuerteil ein Anforderungssignal ausgibt, das den Start des Motor anfordert, wenn festgestellt wird, dass die Wassertemperatur niedriger als ein Schwellenwert ist, wobei

der Steuerteil den Schwellenwert in Übereinstimmung mit einem Anstieg einer von dem Hilfsheizelement emittierten Wärmemenge senkt, basierend auf einem Betriebszustand des Hilfsheizelements, in dem erlaubten Zustand, in dem die klimatisierte Luft zu dem vorbestimmten Sitz und dem anderen Sitz geblasen wird,

der Steuerteil den Öffnungs- und Schließteil in den unterbundenen Zustand steuert und den Schwellwert, verglichen mit dem in dem erlaubten Zustand gesteuerten Schwellwert weiter senkt, als eine Steuerung eines vorbestimmten Sitzzustands, wenn ein vorbestimmter Sitzklimatisierungsbefehl zum Klimatisieren des vorbestimmten Sitzes bereitgestellt wird, und wobei

bei der Steuerung des vorbestimmten Sitzzustands der Steuerteil die zweite Heizung (65) für den vorbestimmten Sitz aktiviert und den Schwellenwert absenkt, wenn eine von der zweiten Heizung (65) abgegebene Wärmemenge erhöht wird.

2. Klimaanlage nach Anspruch 1, weiterhin umfassend:
eine Eingabeeinheit (90), über die der vorbestimmte Sitzklimatisierungsbefehl eingegeben wird.

3. Klimaanlage nach Anspruch 1 oder 2, ferner umfassend:

einen Insassen-Detektor (77, 78), der ein Vorhandensein oder Fehlen eines Insassen auf mindestens einem Sitz der Mehrzahl von Sitzen erfasst, wobei
der Steuerteil die Steuerung des vorbestimmten Sitzzustands ausführt, wenn basierend auf einem Erfassungsergebnis des Insassen-Detektors bestimmt wird, dass ein Insasse nur in dem vorbestimmten Sitz vorhanden ist.

4. Klimaanlage nach Anspruch 3, wobei
der Insassen-Detektor enthält
einen Gurtdetektor (78), der eine Befestigung eines an dem mindestens einen Sitz vorgesehenen Sitzgurtes erfasst, und
einen Lastdetektor (77), der eine Last erfasst, die zu einer Oberfläche eines Sitzes hinzugefügt ist, an dem der Gurtdetektor vorgesehen ist, und
der Steuerteil bestimmt, dass ein Insasse in dem Sitz vorhanden ist, wenn der Gurtdetektor die Befestigung des Sitzgurtes erfasst oder wenn der Lastdetektor eine Last erfasst, die größer oder gleich einem vorbestimmten Wert ist.

**Revendications**

1. Climatiseur pour un véhicule comprenant :

un boîtier de climatisation (2) ayant un orifice d'admission d'air (6, 7) sur un premier côté et une pluralité de sorties d'air sur un second côté, l'air passant par la pluralité de sorties d'air vers un compartiment de passagers, la pluralité de sorties d'air (20-23, 30-33, 91-93) étant ouvertes pour correspondre à une pluralité de sièges comprenant un siège prédéterminé ou des sièges prédéterminés, ledit siège prédéterminé ou lesdits sièges prédéterminés étant un siège conducteur (Fr-Dr), ou un siège conducteur (Fr-Dr) et un siège passager avant (Fr-Pa), la pluralité de sièges comprenant en outre un autre siège, le boîtier de climatisation (2) ayant un passage d'air entre l'orifice d'admission d'air et la pluralité de sorties d'air, évacue l'air passant par le passage d'air ;
un ventilateur de climatisation (13) envoyant l'air vers le passage d'air du boîtier de climatisation ;
une partie de climatisation (41, 42) ayant un élément chauffant principal (42) qui chauffe l'air envoyé depuis le ventilateur de climatisation en utilisant l'eau de refroidissement d'un moteur (60) en tant que source de chaleur, la partie de climatisation envoyant l'air conditionné à la pluralité de sorties d'air ;
un élément chauffant auxiliaire (43, 65) ayant une source de chaleur différente de la chaleur résiduelle du moteur pour une opération de chauffage, dans lequel l'élément chauffant auxiliaire comprend un premier dispositif de chauffage (43) qui chauffe l'air envoyé à partir du ventilateur de climatisation en utilisant de l'énergie électrique en tant que source de chaleur, et
un second dispositif de chauffage (65) agencé sur chacun parmi le siège prédéterminé et l'autre siège pour chauffer individuellement chacun parmi le siège prédéterminé et l'autre siège en utilisant de l'énergie électrique en tant que source de chaleur ;
une partie d'ouverture et de fermeture (34-36) qui modifie un état d'ouverture et de fermeture de la pluralité de sorties d'air entre un état autorisé et un état intercepté, l'air conditionné étant autorisé à passer par une sortie d'air de la pluralité de sorties d'air qui climatise l'autre siège excepté le siège prédéterminé à l'état autorisé et étant intercepté à l'état intercepté, l'air conditionné étant autorisé à passer par une sortie d'air de la pluralité de sorties d'air qui climatise le siège prédéterminé à l'état intercepté et à l'état autorisé ;

un détecteur de température d'eau (75) qui détecte une température de l'eau de refroidissement ; et

une partie de commande (10) qui réalise une climatisation pour le compartiment de passagers en commandant l'élément chauffant principal et l'élément chauffant auxiliaire sur la base de la température de l'eau de refroidissement détectée par le détecteur de température d'eau, dans lequel la partie de commande produit un signal de demande demandant au moteur de démarrer lorsque l'on détermine que la température d'eau est inférieure à un seuil,

la partie de commande abaisse le seuil selon une augmentation de quantité de chaleur émise à partir de l'élément chauffant auxiliaire sur la base d'un état de fonctionnement de l'élément chauffant auxiliaire, à l'état autorisé dans lequel l'air conditionné est soufflé vers le siège prédéterminé et l'autre siège,

la partie de commande commande la partie d'ouverture et de fermeture à l'état intercepté, et abaisse en outre le seuil par rapport au seuil commandé à l'état autorisé en tant que commande d'un état de siège prédéterminé lorsqu'une commande de climatisation de siège prédéterminé est fournie pour climatiser le siège prédéterminé, et

lors de la commande de l'état de siège prédéterminé, la partie de commande active le second dispositif de chauffage (65) pour le siège prédéterminé, et abaisse le seuil lorsque que la quantité de chaleur émise par le second dispositif de chauffage (65) augmente.

2. Climatiseur selon la revendication 1, comprenant en outre :

une unité d'entrée (90) à travers laquelle la commande de climatisation de siège prédéterminé est entrée.

3. Climatiseur selon la revendication 1 ou 2, comprenant en outre :

un détecteur d'occupant (77, 78) qui détecte une présence ou une absence d'un occupant sur au moins un siège de la pluralité de sièges, dans lequel

la partie de commande exécute la commande de l'état de siège prédéterminé lorsque l'on détermine qu'un occupant est uniquement présent sur le siège prédéterminé sur la base d'un résultat de détection du détecteur d'occupant.

4. Climatiseur selon la revendication 3, dans lequel :
le détecteur d'occupant comprend :

un détecteur de ceinture de sécurité (78) qui détecte une fixation d'une ceinture de sécurité prévue sur le au moins un siège, et

un détecteur de charge (77) qui détecte une charge ajoutée à une surface d'un siège sur laquelle le détecteur de ceinture de sécurité est prévu, et

la partie de commande détermine qu'un occupant est présent sur le siège lorsque le détecteur de charge détecte une charge qui est supérieure ou égale à une valeur prédéterminée.

# FIG. 1

# FIG. 2

# FIG. 3

# FIG. 4

# FIG. 5

START

INITIALIZE — S11

READ DATA — S12

CALCULATE TARGET BLOW-OFF TEMPERATURE — S13

CALCULATE BLOWER CONTROL VOLTAGE — S14

CALCULATE A/M OPENING — S15

CALCULATE INLET·OUTLET MODE — S16

CALCULATE COMPRESSOR CONTROL CURRENT — S17

OUTPUT BLOWER CONTROL VOLTAGE — S18

OUTPUT A/M DOOR CONTROL — S19

OUTPUT INLET·OUTLET SWITCH DOOR CONTROL — S110

OUTPUT COMPRESSOR CONTROL CURRENT — S111

# FIG. 6

```
        START
          │
┌─────────────────────────┐
│ OBTAIN SEAT HEATER STATE │─── S21
└─────────────────────────┘
          │
┌─────────────────────────┐
│     OBTAIN VEHICLE       │─── S22
│     OCCUPANT STATE       │
└─────────────────────────┘
          │
┌─────────────────────────┐
│      SET PTC HEATER      │─── S23
└─────────────────────────┘
          │
┌─────────────────────────┐
│   SET UPPER AND LOWER    │─── S24
│ LIMITS FOR WATER TEMPERATURE │
└─────────────────────────┘
          │
┌─────────────────────────┐
│ CONTROL WATER TEMPERATURE │─── S25
└─────────────────────────┘
          │
         END
```

# FIG. 7

SH STATE OBTAIN PROCESS

S31 Fr-Dr HAVE SH? — NO / YES

S32 SH ON ? — NO / YES

S34 Fr-Dr HAS NO SH

S35 Fr-Dr HAS SH WITH OFF STATE

S33 Fr-Dr HAS SH WITH ON STATE

S36 Fr-Pa HAVE SH? — NO / YES

S37 SH ON ? — NO / YES

S39 Fr-Pa HAS NO SH

S310 Fr-Pa HAS SH WITH OFF STATE

S38 Fr-Pa HAS SH WITH ON STATE

S311 Rr-Dr HAVE SH? — NO / YES

S312 SH ON ? — NO / YES

S314 Rr-Dr HAS NO SH

S315 Rr-Dr HAS SH WITH OFF STATE

S313 Rr-Dr HAS SH WITH ON STATE

S316 Rr-Pa HAVE SH? — NO / YES

S317 SH ON ? — NO / YES

S319 Rr-Pa HAS NO SH

S320 Rr-Pa HAS SH WITH OFF STATE

S318 Rr-Pa HAS SH WITH ON STATE

END

# FIG. 8

```
        ( PROCESS OF OBTAINING
          VEHICLE OCCUPANT STATE )
                    |
    S41             |
           ┌────────────────────┐        NO
           │ UNDER CONCENTRATED  ├──────────────┐
           │     CONTROL?        │              │
           └────────────────────┘              │
                   YES                          │
    S42             |                           │
    NO     ┌────────────────────┐              │
  ┌────────┤  OCCUPANT EXISTS    │              │
  │        │     AT Fr-Pa?       │              │
  │        └────────────────────┘              │
  │               YES                           │
  │                |                            │
S44              S43                          S45
┌──────────────┐ ┌──────────────┐ ┌──────────────────────┐
│ OCCUPANT IS  │ │ OCCUPANTS ARE│ │   OCCUPANTS ARE       │
│ ONLY AT Fr-Dr│ │ ONLY AT FRONT│ │ AT BOTH FRONT AND REAR│
└──────────────┘ └──────────────┘ └──────────────────────┘
        │               │                       │
        └───────────────┼───────────────────────┘
                        |
                     ( END )
```

26

# FIG. 9

# FIG. 10

# FIG. 11

PROCESS OF SETTING PTC HEATER

S51 — MAXHOT CONDITION? — NO

YES — S52 — OUTSIDE AIR TEMPERATURE < −9°C? — NO

YES — S53 — WATER TEMPERATURE < 68°C? — NO

YES — S54 — PTC HEATER = 600W

S55 — 68°C ≤ WATER TEMPERATURE < 73°C? — NO

YES — S56 — PTC HEATER = 450W

S57 — 73°C ≤ WATER TEMPERATURE < 78°C? — NO

YES — S58 — PTC HEATER = 300W

S59 — PTC HEATER = 0W

S510 — −9°C ≤ OUTSIDE AIR TEMPERATURE < −7°C? — NO

YES — S511 — WATER TEMPERATURE < 63°C? — NO

YES — S512 — PTC HEATER = 450W

S513 — PTC HEATER = 0W

S514 — −7°C ≤ OUTSIDE AIR TEMPERATURE < 10°C? — NO

YES — S515 — WATER TEMPERATURE < 60°C? — NO

YES — S516 — PTC HEATER = 300W

S517 — PTC HEATER = 0W

END

# FIG. 12

```
        ( WATER TEMPERATURE SET PROCESS )
                      │
    ┌─────────────────────────────────────────┐
    │           DETERMINE TO COOPERATE         │
    │ OR NOT BASED ON SEAT HEATER PRESENCE     │──── S61
    │        OR ABSENCE AND ON/OFF STATE       │
    │          AND VEHICLE OCCUPANT STATE      │
    └─────────────────────────────────────────┘
                      │
    ┌─────────────────────────────────────────┐
    │         DETERMINE WATER TEMPERATURE      │
    │       BASED ON W-NUMBER OF PTC HEATER    │──── S62
    │         AND COOPERATION DETERMINATION    │
    └─────────────────────────────────────────┘
                      │
                      ▼
               (     END     )
```

## FIG. 13

PROCESS OF CONTROLLING WATER TEMPERATURE

OBTAIN ENGINE WATER TEMPERATURE — S71

LOWER LIMIT > ENGINE WATER TEMPERATURE? — S72

NO

YES

OUTPUT ENGINE-ON — S73

UPPER LIMIT < ENGINE WATER TEMPERATURE? — S74

NO

YES

OUTPUT ENGINE-OFF — S75

# FIG. 14

| SEAT HEATER PRESENCE OR ABSENCE AND ON-OFF STATE | | | | | | | | VEHICLE OCCUPANT STATE DETERMINATION | | COOPERATE | NOTE |
|---|---|---|---|---|---|---|---|---|---|---|---|
| Fr-Dr | | Fr-Pa | | Rr-Dr | | Rr-Pa | | CONCENTRATED CONTROL | Fr-Pa | | |
| SEAT HEATER | STATE | SEAT HEATER | STATE | SEAT HEATER | STATE | SEAT HEATER | STATE | STATE | STATE | | |
| NOT HAVE | — | NOT HAVE | — | — | — | — | — | — | — | OFF | (1) |
| HAVE | OFF | HAVE | — | — | — | — | — | — | — | | (2) |
| | ON | | OFF | — | — | — | — | — | ON | | (3) |
| | ON | | ON | NOT HAVE | — | NOT HAVE | — | OFF | — | | (4) |
| | ON | | ON | HAVE | OFF | HAVE | — | OFF | — | | (5) |
| | ON | | ON | HAVE | — | HAVE | OFF | OFF | — | | (5) |
| | ON | | ON | HAVE | ON | HAVE | ON | — | — | ON | (6) |
| | ON | | ON | — | — | — | — | ON | — | | (7) |
| | ON | | OFF | — | — | — | — | ON | OFF | | (8) |

EP 2 700 518 B1

# FIG. 15

| PTC HEATER STATE DETERMINATION | | COOPE-RATE | WATER TEMPERATURE DETERMINATION | | NOTE |
|---|---|---|---|---|---|
| PTC HEATER STATE | | | WATER TEMPERATURE | | |
| PRESENCE OR ABSENCE | W | | UPPER LIMIT | LOWER LIMIT | |
| NO HEATER | 0 | OFF | 85 | 80 | WATER TEMPERATURE (WT) IS NOT LOWERED AND SET AS BASE |
| | | ON | 82 | 77 | WT IS LOWERED THAN BASE BY 3°C |
| HAVE HEATER | 0 | OFF | 85 | 80 | WT IS THE SAME AS BASE |
| | | ON | 82 | 77 | WT IS LOWERED THAN BASE BY 3°C |
| | 300 | OFF | 80 | 75 | WT IS LOWERED THAN BASE BY 5°C |
| | | ON | 77 | 72 | WT IS LOWERED THAN BASE BY 8°C |
| | 450 | OFF | 75 | 70 | WT IS LOWERED THAN BASE BY 10°C |
| | | ON | 72 | 67 | WT IS LOWERED THAN BASE BY 13°C |
| | 600 | OFF | 70 | 65 | WT IS LOWERED THAN BASE BY 15°C |
| | | ON | 67 | 62 | WT IS LOWERED THAN BASE BY 18°C |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008168766 A1
- JP H10278569 A
- JP 2008174042 A